(19) Europäisches Patentamt
European Patent Office
Office européen des brevets

(11) EP 1 667 265 B1

(12) **EUROPEAN PATENT SPECIFICATION**

(45) Date of publication and mention of the grant of the patent:
**23.03.2011 Bulletin 2011/12**

(21) Application number: **04773294.6**

(22) Date of filing: **17.09.2004**

(51) Int Cl.:
***H01M 8/10*** *(2006.01)*
***C08J 5/22*** *(2006.01)*
***C08F 16/30*** *(2006.01)*
*H01M 4/86* *(2006.01)*
*H01M 4/92* *(2006.01)*

(86) International application number:
**PCT/JP2004/013675**

(87) International publication number:
**WO 2005/029624 (31.03.2005 Gazette 2005/13)**

(54) **MEMBRANE-ELECTRODE ASSEMBLY FOR SOLID POLYMER FUEL CELL**

MEMBRAN-ELEKTRODENBAUGRUPPE FÜR EINE FESTPOLYMER-BRENNSTOFFZELLE

ENSEMBLE ELECTRODE-MEMBRANE POUR PILE A COMBUSTIBLE A POLYMERE SOLIDE

(84) Designated Contracting States:
**DE IT**

(30) Priority: **17.09.2003 JP 2003324541**
**30.09.2003 JP 2003340213**
**17.10.2003 JP 2003357604**

(43) Date of publication of application:
**07.06.2006 Bulletin 2006/23**

(73) Proprietor: **Asahi Kasei Kabushiki Kaisha**
**Osaka-shi,**
**Osaka 530-8205 (JP)**

(72) Inventors:
- **HOSHI, Nobuto**
  **Shizuoka 4160939 (JP)**
- **UEMATSU, Nobuyuki**
  **Shizuoka 4160939 (JP)**
- **SAITO, Hideo**
  **Shizuoka 4160917 (JP)**
- **HATTORI, Makiko**
  **Fuji-shi, Shizuoka 4160944 (JP)**
- **AOYAGI, Takeshi**
  **Fuji-shi, Shizuoka 4170071 (JP)**
- **IKEDA, Masanori**
  **Fuji-shi, Shizuoka 4170801 (JP)**

(74) Representative: **von Kreisler Selting Werner**
**Deichmannhaus am Dom**
**Bahnhofsvorplatz 1**
**50667 Köln (DE)**

(56) References cited:
**EP-A- 0 041 733**
**EP-A- 0 289 869**
**EP-A- 1 176 655**
**EP-A- 1 323 744**
**WO-A-86/06879**
**WO-A-94/03503**
**WO-A-94/07274**
**WO-A-03/050151**
**WO-A-2004/062019**
**AU-B2- 523 608**
**JP-A- 6 333 574**
**JP-A- 9 120 827**
**JP-A- 10 289 721**
**JP-A- 11 116 710**
**JP-A- 2000 268 834**
**JP-A- 2001 185 164**
**JP-A- 2002 146 018**
**JP-A- 2002 231 269**
**JP-A- 2002 313 365**
**JP-A- 2002 352 819**
**JP-A- 2003 100 316**
**JP-A- 2003 113 136**
**JP-A- 2003 147 075**
**JP-A- 2004 018 676**
**US-A- 5 281 680**

- **G.A. EISMAN: "The Application of Dow Chemical's Perfluorinated Membranes in Proton-Exchange Membrane Fuel Cells" JOURNAL OF POWER SOURCES, vol. 29, no. 3 / 4, 1 February 1990 (1990-02-01), pages 389-398, XP000233854 ISSN: 0378-7753**
- **O. SAVADOGO: "Emerging membranes for electrochemical systems : (I) Solid polymer electrolyte membranes for fuel cell systems" JOURNAL OF NEW MATERIALS FOR ELECTROCHEMICAL SYSTEMS, vol. 1, 1998, pages 47-66, XP009014846 ISSN: 1480-2422**
- **DATABASE INSPEC [Online] September 1984 (1984-09), A. DUTTA: "On viscosity-melt flow relationship" XP002466983 Database accession no. 2449820 & RHEOLOGICA ACTA, vol. 23, no. 5, September 1984 (1984-09), pages 565-569, ISSN: 0035-4511**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 667 265 B1

## Description

TECHNICAL FIELD

The present invention is based on a finding that a fluorinated sulfonic acid polymer with a specific side chain structure and molecular weight range provides a material having superior chemical stability (oxidation resistance and heat stability), high heat resistance, and high proton conductivity, along with high mechanical strength and small dimensional change between dry and wet states, and relates to a membrane electrode assembly for a polymer electrolyte fuel cell superior in durability and, in particular, suitable to operation in high temperature region, which is characterized by using said fluorinated sulfonic acid polymer as at least one of a membrane and a catalyst binder, and associated parts materials thereof.

Prior Art

Recently, a fuel cell using a solid polymer diaphragm as an electrolyte has been proposed since it is possible to reduce a compact size and weight and to provide a high output density even at relatively low temperature and thus development thereof has been accelerated.
Solid polymer materials used for these objectives are required to have superior proton conductivity, suitable water holding agility, gas barrier property against hydrogen gas, oxygen gas, etc. Various polymers with a sulfonic acid group, a phosphonic acid group and the like have been studied and many materials have been proposed (see, for example, O. Savadogo, Journal of New Materials for Electrochemical Systems I, 47-66 (1998).)
Under practical operating conditions of a fuel cell, active oxygen species with high oxidizability are generated at an electrode. Thus durability under such severe oxidative atmosphere is required, in particular, to stably operate a fuel cell over a long period of time. Many hydrocarbon based materials which have been proposed up to now include those superior in initial operation characteristics of a fuel cell, however, they still have the problem of durability.
Therefore, a perfluorosulfonic acid,polymer represented by the following general formula (1):

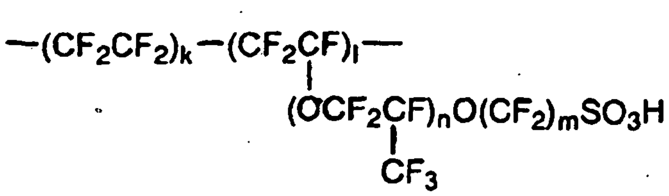

(1)

(wherein k/l=from 3 to 10, m=2, and n=0 or 1)
is mainly adopted now as a study toward the practical use.

This polymer can be obtained by membrane formation of a copolymer between perfluorovinyl ether monomer represented by the following general formula (2):

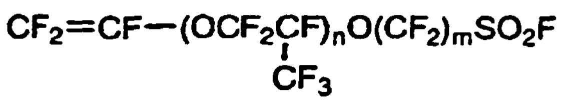

(2)

(wherein m and n are the same as in the general formula (1)), and tetrafluoroethylene (TFE), followed by hydrolysis reaction.

Recently, however, it was clarified that even such a membrane of a perfluorosulfonic acid polymer is gradually decomposed under severe operation conditions of a fuel cell and fluoride ions are discharged in water during operation, and therefore a solution for this problem is required. However, there have been no reports concerning the structure of a fluorinated sulfonic acid polymer superior in chemical stability to solve the problem of the decomposition of a perfluorosulfonic acid polymer under such a service condition of a fuel cell, much less concerning a high durable membrane for a fuel cell being superior in mechanical and dimensional stabilities and using such a polymer with high chemical stability.

JP-A-57-25331 has proposed a membrane, which is mainly used with ion exchange capacity expressed by

equivalent weight (EW) of from 800 to 1500 g/equivalent and hydration product, (which will be explained later), of lower than 22,000, as a membrane having low swelling ratio compared with an electrolyte membrane corresponding to the general formula (1) wherein n=1 and m=2. As an example thereof, a structure corresponding to the general formula (1) wherein n=0 and m=from 1 to 6, has been exemplified and the preferable range of m is shown to be 2 and 3. However, there is not any explanation of a concrete example of polymer wherein m=not less than 4 and its characteristics. Also, there is no reference to the difference in chemical stability and oxidation resistance of the polymer due to a different m value. Similarly, JP-A-63-297406 proposes a membrane with EW of lower than 800 g/equivalent and hydration product of lower than 29,000 and shows, as an example thereof, a structure corresponding to the general formula (1) wherein n=0 and m=from 1 to 4. However, there is no explanation on a polymer of a structure corresponding to m=4 and also there is no suggestion regarding chemical stability and oxidation resistance.

JP-A-2000-268834 discloses the use of a polymer represented by the general formula (1) wherein m=3 and n=0 as a membrane for a fuel cell and JP-A-6-333574 discloses the use thereof as a catalyst binder. However, as to this polymer, there are no reports concerning chemical stability, oxidation resistance, dimensional stability between dry and wet states, decomposition under operating condition of a fuel cell and the like. Further, as a method for manufacturing of a raw material monomer for this polymer, very complicated and multi-step method is known.

JP-A-58-93728 discloses a polymer represented by the general formula (1) wherein m=4 and n=0 with ion exchange capacity expressed by equivalent weight (EW) of 990 g/equivalent as an ion exchange membrane material for a brine electrolysis. JP-A-2001-194798 discloses a polymer represented by the general formula (1) wherein m=4 and n=1 with EW of 1,044 g/equivalent as a membrane material for antireflection. However, there are no reports concerning the use of their polymers for a fuel cell material in their specifications. Further, both specifications fail to report a polymer with low EW which is particularly useful as a fuel cell material due to high proton conductivity. JP-A-2002-533877 also discloses a polymer represented by the general formula (1) wherein m=5 and n=1, but there is no explanation of characteristics such as oxidation resistance and the like thereof.

An international publication, WO-A-2004/062019, discloses a membrane for a fuel cell using a polymer represented by the general formula (1) wherein m=4 and n=0 and describes that a membrane with high EW (small ion exchange group density) and high hydration product value may be obtained by using said polymer and be suitable to a membrane for a fuel cell. Specifically, this publication discloses a preferable membrane with EW in the range from 800 to 1,200 g/equivalent and hydration product of not lower than 22,000. "Hydration product" in this publication is a parameter defined as a product of equivalent of water amount absorbed by a membrane per 1 equivalent of a sulfonic acid group and EW. Water amount absorbed is measured holding a membrane in a boiling water. Said specification asserts that this membrane is superior in mechanical characteristics due to high EW and superior in proton conductivity due to high hydration product.

It is true, as described in the WO-A-2004/062019 publication a large hydration product is necessary to obtain high ion conductivity by a membrane with high EW and such membrane with high hydration product provides a very big change of membrane size between dry and wet states. Therefore, when this membrane is used as a membrane for a fuel cell, the following problems occur and it is difficult to produce a highly durable membrane for a practical fuel cell enabling long period operation:

1. Process control of stack assembly of membrane electrode assembly and a fuel cell is difficult due to a large dimensional change caused by humidity and thus quality control of the obtained product is also difficult.
2. In membrane electrode assembly for a fuel cell incorporated with this membrane, structure of membrane electrode assembly fails to maintain stability and is easily broken in a short period of time due to a big change in membrane dimensions with the change of humidity during on-off cycle operation of a fuel cell.
3. Membrane strength largely decreases when a membrane with high hydration product absorbs waster. Therefore, membrane electrode assembly is significantly easy to be destroyed during the operation of a fuel cell due to the effects of membrane strength lowering and the above-described membrane dimensional change.
4. Particularly high proton conductivity is not obtained in a membrane with high EW, even if it has high hydration product, and thus membrane thickness should be designed thin to obtain practical proton conductivity. In this case, this membrane cannot provide practical strength due to the reduction of membrane strength in wet state as mentioned above.

The specification of WO-A-2004/062019 does not disclose chemical stability, heat resistance, oxidation resistance, and decomposition property under operating conditions of a fuel cell of said polymer.

EP 1323744 A1 discloses semicrystalline sulphonic fluorinated ionomers having an equivalent weight higher than 700 g/eq, up to 1700, comprising (a) monomeric units deriving from one or more fluorinated monomers containing at least one ethylene unsaturation, (b) fluorinated monomeric units containing sulfonyl groups $-SO_2F$ in such amount to give the above equivalent weight, deriving from $F_2C=CF-O-(CF_2)_q-SO_2F$ wherein q is an integer equal to 2 or 3.

WO 94/03503 A describes a fluoroorganic polymeric material which comprises a polymeric chain and at least one group pendant from the polymeric chain, in which a group pendant from the polymeric chain comprises at least one

ion-exchange group or group convertible thereto, wherein the EW distribution is greater than 1.05, and wherein the ion-exchange group or group convertible thereto is preferably linked to the polymeric chain through an acyclic secondary carbon atom, for use as an ion-exchange membrane in an electrochemical device.

US -A -5,281,680 discloses a process for the non-aqueous polymerization of tetrafluoroethylene with functional fluorinated comonomers. The process uses low TFE to comonomer ratios to form copolymers with high molecular weight and low melt flow. The copolymers are useful as membranes in electrolytic cells or fuel cells.

AU 523 608 B2 is directed to a fluorinated carboxylic acid or its derivative represented by the formula

$$FSO_2(CF_2)_nY$$

wherein Y stands for -COY' or -CN, wherein Y' is a halogen, hydrogen, $-NH_2$, -OM (M is hydrogen, a metal or ammonium group), $-OR^3$, ($R^3$ is an alkyl having 1 to 10 carbon atoms or an aryl), and n stands for an integer of 2 to 4, and a process for producing the same.

In Journal of Powersources, Vol. 29, No. 3/4, 1 February 1990 (1990-02-01), pages 389 to 398 the application of DOW Chemicals perfluorinated membranes in proton-exchange membrane fuel cells are disclosed.

WO 86/06879 A describes an electrochemical cell component having two planarly disposed electrodes bonded to or intimately pressed against opposing sides of a proton exchange active film, said film having: (a) sulfonyl ion exchange active groups present in their protonated form, (b) an equivalent weight of less than about 1000, and (c) a storage modulus of greater than about $1\times10^8$ dynes/square centimeter at a temperature greater than about 110 °C, which is particularly useful in proton exchange polymer film fuel cells.

WO 03/050151 A1 discloses an ionomer and a process for forming the ionomer such that the ionomer has (1) low equivalent weight (below 950, preferably between 625 and 850, and most preferably between 675 and 800) and (2) high conductivity, greater than 0.13 S/cm). In addition, an ionomer having (1) low equivalent weight (below 950, preferably between 625 and 850, and most preferably between 675 and 800) and (2) acceptably low hydration (less than about 220 weight percent) is described. That ionomers are described as being capable of being processes into thin film and as extremely well suited for low humidity or high temperature fuel cell applications.

JP 09120827A describes a porous base impregnated with a perfluorocarbon sulfonate resin and a composite polymer film obtained through deduction, which is used as a solid high polymer electrolyte film, which has a large ion exchange capacity. A resulting fuel cell incorporating this electrolyte film has a reduced electric resistance in the film.

WO 94/07274 A discloses an ion exchange membrane or ion exchange membrane/electrode assembly having increased efficiency in proton exchange processes as the result of membrane hydration processing comprising heating the hermetically sealed membrane or membrane/electrode assembly at elevated temperature and pressure so as to provide increased hydration levels of the membranes.

## Summary of the Invention

### Problem to be solved by the invention

It is an object of the present invention to provide a membrane electrode assembly for a polymer electrolyte fuel cell superior in durability and, in particular, suitable to operation in high temperature region by using a fluorinated sulfonic acid polymer having superior proton conductivity, chemical stability, oxidation resistance, and heat resistance as at least one of a membrane and a catalyst binder. In more detail, the present invention provides a membrane electrode assembly for a polymer electrolyte fuel cell which has little polymer decomposition even under high temperature operation condition and can be stably used over a long period of time while maintaining high ion conductivity and high mechanical strength as well as good dimensional stability by using said fluorinated sulfonic acid polymer as a membrane and/or a catalyst binder for a polymer electrolyte fuel cell.

### Means for solving problem

The inventors of the present invention have extensively studied the relation between polymer structure and molecular weight thereof and polymer characteristics or membrane characteristics to find out a fluorinated sulfonic acid polymer which is suitable to a solid electrolyte membrane for a fuel cell or a polymer for a catalyst binder and can solve the above-described problems of materials known in the art. As a result, the inventors of the present invention have found that a fluorinated sulfonic acid polymer having specific side chain structure and molecular weight not lower than a specific level (or melt fluidity not higher than a specific level), and preferably having further EW and hydration product or product thereof not higher than a specific value, is useful as a fuel cell material.

After the present invention was invented, the above-described international publication, WO-A-2004/062019, was disclosed. Structure of a polymer composing a membrane disclosed in this publication includes the polymer structure of

the present invention. However, this publication discloses that a membrane having high EW and high hydration product value can possibly be produced by using the polymer described therein, and that the membrane is suitable to a membrane for a fuel cell. That is, a membrane material described in this publication is a material based on completely opposite concept from a material of the above-described present invention and naturally does not satisfy the requirements as a material for a fuel cell of the present invention.
Therefore, a polymer described in the present invention having various characteristics required for a solid polyelectrolyte for a fuel cell and a product derived therefrom are realized through wide study by the present inventors for the first time.

The present invention is as follows:

1. A membrane electrode assembly for a polymer electrolyte fuel cell characterized by using, as solid polyelectrolyte of at least one of a membrane and a catalyst binder, a fluorinated sulfonic acid polymer with a monomer unit represented by the following general formula (4):

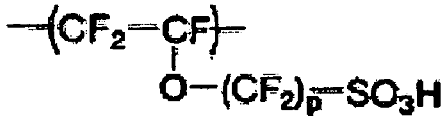

(4)

wherein p is an integer of from 4 to 8, and with a tetrafluoroethylene unit, wherein the polymer having $-SO_2F$ group instead of $-SO_3H$ group of said fluorinated sulfonic acid polymer has melt flow rate (MFR) of not higher than 100 g/10 min at 270 °C, characterized in that the fluorinated sulfonic acid polymer has glass transition temperature of not lower than 130 °C and has ion exchange capacity of from 600 to 1,300 g/equivalent.

2. The membrane electrode assembly according to item 1, characterized in that the fluorinated sulfonic acid polymer has initial temperature of thermal decomposition of not lower than 330 °C and not higher than 450 °C when the temperature is raised at 10 degrees/min in air by thermogravimetric analysis.

3. The membrane electrode assembly according to item 1 or 2, characterized in that in the fluorinated sulfonic acid polymer, the generated amount of fluoride ions is not higher than 0.3% by weight based on the total amount of fluorine in the original fluorinated sulfonic acid polymer when the polymer in a shape of membrane continues to be contacted with air saturated with 80 °C water at 200 °C for 8 hours.

4. The membrane electrode assembly according to any one of items 1 to 3, characterized in that in the fluorinated sulfonic acid polymer, activation energy for a rate determining step of the reaction in the process of thermal oxidative decomposition obtained by calculation using a density functional method is not lower than 40 kcal/equivalent and not higher than 80 kcal/equivalent on the basis of a sulfonic acid group.

5. The membrane electrode assembly according to item 1, wherein p is 4 or 6 in the general formula (4).

6. The membrane electrode assembly according to any one of items 1 to 5, wherein the fluorinated sulfonic acid polymer has an ionic conductivity in water at 23 °C of not lower than 0.06 S/cm.

7. The membrane electrode assembly according to any one of items 1 to 6, wherein the fluorinated sulfonic acid polymer has an ionic conductivity in water at 23 °C of not lower than 0.1 S/cm.

8. The membrane electrode assembly according to any one of items 1 to 7, characterized in that in the fluorinated sulfonic acid polymer in the general formula (4) p is 4 and the ratio of scattering intensity ($I^2/I^1$) is not higher than 100, wherein $I^1$ is the scattering intensity at 2θ of 3° and $I^2$ is the scattering intensity at 2θ of 0.3°, when the polymer dipped in water is measured with small angle X ray scattering.

Effect of Invention

Since a fluorinated sulfonic acid polymer having a monomer unit represented by the following general formula

(4) as mentioned above
has little decomposition during operation, the membrane electrode assembly for a polymer electrolyte fuel cell can be used stably over a long period of time by using it as at least one of a membrane and a catalyst binder of the membrane electrode assembly for a polymer electrolyte fuel cell.

Best Mode To Carry Out The Present Invention

The present invention will be explained in more detail.
The present invention relates to a high-durable membrane electrode assembly for a polymer electrolyte fuel cell, characterized by using a fluorinated sulfonic acid polymer with a specific side chain structure being superior in chemical stability, heat resistance, and oxidation resistance as at least one of a membrane and a catalyst binder. The present invention also relates to an invention that a membrane for a polymer solid electrolyte having specific characteristics formed by using a polymer with specific structure selected from said highly-stable fluorinated sulfonic acid polymer provides a highly-durable membrane for a fuel cell. Therefore, the superior durability is realized when various accelerated tests as a fuel cell, such as OCV (open circuit voltage) accelerated test, are carried out using the membrane electrode assembly for a polymer electrolyte fuel cell of the present invention.
The inventors of the present invention have extensively studied the structure of a fluorinated sulfonic acid polymer to find out a high-stable polymer solid electrolyte material which can be stably used over a long period of time under operating condition of a fuel cell. As for the results, the inventors of the present invention have found that a fluorinated sulfonic acid polymer having a monomer unit represented by the following general formula (4):

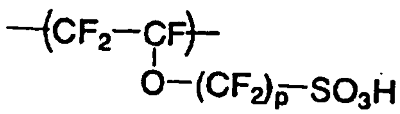

(4)

wherein p is an integer of from 4 to 8 and with a tetrafluoroethylene unit stability, heat resistance and oxidation resistance suitable to a polymer solid electrolyte material for a fuel cell.
A fluorinated sulfonic acid polymer having a monomer unit represented by the general formula (4) is discussed below.

<polymer structure>

In particular, as in the general formula (4), the structure represented by the following general formula (5):

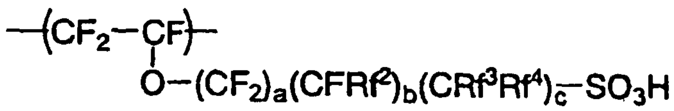

(5)

(wherein each of a, b and c is integers in the range from 1 to 10, providing that a+b+c is from 4 to 10;
$Rf^2$, $Rf^3$, and $Rf^4$ are perfluoro alkyl groups with carbon atoms of from 1 to 4, providing that total carbon atoms of a $(CF_2)_a(CFRf^2)_b(CRf^3Rf^4)_c$ group are from 4 to 10) is preferable. In the general formula (5), each unit of $(CF_2)$, $(CFRf^2)$ and $(CRf^3 Rf^4)$ may be connected in any order and $Rf^2$, $Rf^3$, and $Rf^4$ may also form cyclic structure by bonding to each other. In the general formula (5), a+b+c is preferably from 4 to 8 and further preferably from 4 to 6.
In the general formula (4), p is an integer of from 4 to 10, more preferably from 4 to 8 and, most preferably from 4 to 6. A polymer in the general formula (4) (wherein p is 2) is not suitable as a polymer solid electrolyte material for a fuel cell due to having insufficient oxidation resistance. A polymer with the general formula (4), wherein p=3, provides totally insufficient effect compared with the polymer with p of not lower than 4, although it is somewhat superior in oxidation resistance compared with the polymer with p=2.
Further, in a manufacturing process of a vinyl monomer which is raw material of the polymer with p=3, low yield (not higher than 50%) is obtained due to considerable side reactions (cyclization reactions) in the final vinylation reaction process and thus it is not a practical manufacturing process. In the case where p is not lower than 11 in the general formula (4), the polymer is not suitable for the industrial use due to a decrease in glass transition temperature and further difficulty in manufacturing of the monomer and handling thereof.

The examples of a group represented by $-(CF_2)_p-SO_3H$ in the general formula (4) are shown below:

$-CF_2CF_2CF_2CF_2SO_3H$

$-CF_2CF_2CF_2CF_2CF_2SO_3H$

$-CF_2CF_2CF_2CF_2CF_2CF_2SO_3H$

$-CF_2CF_2CF_2CF_2CF_2CF_2CF_2CF_2SO_3H$

Among these, a fluorinated sulfonic acid polymer with a $-CF_2CF_2CF_2CF_2CF_2CF_2SO_3H$ group is a new compound synthesized for the first time in the present invention and is included in the present invention.

A fluorinated sulfonic acid polymer having a monomer unit represented by the the general formula (4) is preferably a copolymer with one type or not less than two types of other vinyl monomers. A fluorinated vinyl monomer is preferable as this comonomer due to superior chemical stability, and a perfluorovinyl monomer is further preferable. The examples include tetrafluoroethylene (TFE), chlorotrifluoroethylene (CTFE), vinylidene fluoride, hexafluoroethylene and the like. TFE or CTFE are preferred, and TFE is more preferable. In addition to two components with TFE and the like, a copolymer of three components or more may be considered by the addition of a perfluoro monomer such as perfluoro olefin, perfluoro vinylalkyl ether, perfluoro-1,3-dioxole and the like to adjust properties. Polymer terminals generally have a carboxylic acid group or a carbon-hydrogen bond and the like derived from a chain transfer reaction or a termination reaction, however, the heat stability or the oxidation resistance of the polymer can be further improved by stabilizing these groups by the fluorinated treatment of the polymer terminals.

The examples of a fluorinated sulfonic acid polymer having a monomer unit represented by the general formula (4) are shown below:

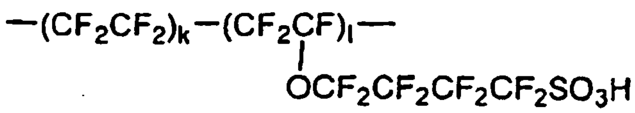
(6)

(k/l is from 2.2 to 9.2)

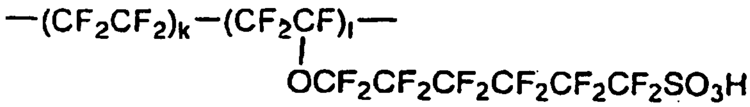
(7)

(k/l is from 1.2 to 8.2)

A polymer represented by the general formula (1) (wherein m is 4 and n is 0) disclosed in the above-described international publication, WO-A-2004/062019, and JP-A-58-93728 includes a highly-stable fluorinated sulfonic acid polymer having a monomer unit represented by the general formula (4) used in the present invention, however, in these specifications, there is no explanation concerning chemical stability (oxidation resistance, heat stability) or heat resistance (high glass transition temperature) of the polymer. That is, the high chemical stability (oxidation resistance, heat stability) and the heat resistance (high glass transition temperature) of the above described fluorinated sulfonic acid polymer having a monomer unit represented by the general formula (4) are characteristics confirmed for the first time in the present invention.

Further, the inventors of the present invention studied characteristics of said fluorinated sulfonic acid polymer in detail to develop a highly-durable fuel cell material using the above-described fluorinated sulfonic acid polymer having a monomer unit represented by the general formula (4) which was confirmed to have high chemical stability (oxidation resistance, heat stability), and heat resistance (high glass transition temperature).

As for the results, the inventors of the present invention have found that when the fluorinated sulfonic acid

polymer has a molecular weight not lower than specific value (that is melt fluidity not higher than specific level), it provides a material with high mechanical strength and small dimensional change between dry and wet states, while maintaining the above-described chemical stability and heat resistance, and thus a membrane or a catalyst binder of membrane electrode assembly for a highly-durable polymer electrolyte fuel cell is obtained. As a measure for molecular weight of a fluorinated sulfonic acid polymer, melt flow rate (MFR) at 270°C is generally evaluated when the polymer has $-SO_2F$ group instead of $-SO_3H$ group. It is necessary that melt flow rate (MFR) at 270°C, when the polymer has $-SO_2F$ group instead of $-SO_3H$ group, should not be higher than 100 g/10 min, preferably 80 g/10 min, further preferably 60 g/10 min, further preferably 40 g/10 min, further preferably 20 g/10 min, and particularly preferably 10 g/10. min to express characteristics of the fluorinated sulfonic acid polymer suitable to the above-described fuel cell material. MFR here is the value measured under conditions of 2.16 kg load and orifice diameter of 2.09 mm. As described above, it is only necessary that a fluorinated sulfonic acid polymer, which is suitable for the present invention, should have on MFR of not higher than a specific value when the polymer has $-SO_2F$ group instead of $-SO_3H$ group, and thus a polymer with crosslinked polymer structure is also included in the polymer.

The MFR being too low, makes it difficult to obtain melt membrane formation and to prepare a solution or dispersion for the formation of a cast membrane and thus the lower limit of MFR is preferably 0.00001 g/10 min, more preferably 0.0001 g/10 min, further preferably 0.001 g/10 min, and particularly preferably 0.01 g/10 min.

As shown above, in a fluorinated sulfonic acid polymer having a monomer unit represented by the general formula (4), the characteristics of the fluorinated sulfonic acid polymer with MFR not lower than 100 g/10 min is insufficient because of characteristics required in a solid electrolyte polymer for a fuel cell such as dimensional change between dry and wet states, resistance to hot water solubility, various mechanical strength, etc. However, said polymer with MFR of not lower than specific value (for example, not lower than 100 g/10 min) was confirmed to satisfy the above-described characteristics required. That is, a fluorinated sulfonic acid polymer having a monomer unit represented by the general formula (4 and its MFR of not lower than specific value was confirmed to have high chemical stability (oxidation resistance, heat stability) and heat resistance (high glass transition temperature) as well as good physical characteristics (low dimensional change in dry and wet states, resistance to hot water solubility, various mechanical strength and the like) and thus to be substantially superior material as a solid electrolyte polymer for a fuel cell.

The relationship between MFR values and various characteristics of a fluorinated sulfonic acid polymer having a monomer unit represented by the general formula (4) will be explained in more detail below.

a-1) percentage of water content, hydration product

A fluorinated sulfonic acid polymer having a monomer unit represented by the general formula (4) shows drastic increase in the percentage of water content when the MFR is over 100 g/10 min, and it also accompanies drastic increase in hydration product. A polymer with high water content is not suitable as a solid electrolyte polymer for a fuel cell because of large dimensional change in dry and wet states, high solubility in hot water, decreases of mechanical strength of swelled membrane and the like as hereinafter described. As an example, the relation between MFR and hydration product of a fluorinated sulfonic acid polymer having a monomer unit represented by the general formula (6) is shown in Fig.2.

a-2) low dimensional change between dry and wet states

It was found that a fluorinated sulfonic acid polymer having a monomer unit represented by the general formula (4) shows, when the MFR value is over 100 g/10 min, drastic increases in dimensional change between dry and wet states, water content or hydration product with the increase in MFR value. For example, in a fluorinated sulfonic acid polymer represented by the general formula (6) with EW of from 800 to 900 or around 1,000, the dimensional change in dry and wet states drastically increases when MFR is over 100 g/10 min, and the value of dimensional change between dry and wet states increases up to nearly 2 times when the MFR is around 700 g/10 min, compared with when MFR is not higher than 100 g/10 min. The dimensional change between dry and wet states here is the increase in the ratio of area after treatment in 100°C hot water (value in measuring hydration product) to area in dry state. With dimensional change in dry and wet states being too high, membrane bending or further folding in a cell during operation as a fuel cell is caused, and therefore operating efficiency is poor. It also increases the difference in swell ratio between areas pressed and not-pressed by a packing near cell edge, and thus causes membrane fracture.

a-3) solubility resistance in hot water

It was found that a fluorinated sulfonic acid polymer having a monomer unit represented by the general formula (4) also shows, when MFR value is over 100 g/10 min, the drastic increase in hot water solubility with the increase in MFR value. The enhanced solubility of the polymer in hot water means the elution of the polymer during operation of a

fuel cell. In practical operation of a fuel cell, MEA may be subjected to high temperature locally due to various reasons such as generation of a reaction between leaked hydrogen and oxygen, and thus a solid electrolyte polymer for a fuel cell is required to have little solubility in hot water even at such a high temperature.

The solubility in hot water of said polymer in the present invention is expressed by the decreased mass value when a dry polymer is treated with 160°C hot water for 3 hours in a pressure vessel, followed by redrying. A polymer of the present invention preferably has the mass decrease by said hot water treatment of not higher than 10%, more preferably not higher than 8%, further preferably not higher than 6%, further preferably not higher than 4%, and most preferably not higher than 2%.

a-4) fluidization temperature

It was found that a fluorinated sulfonic acid polymer having a monomer unit represented by the general formula (4) also shows the drastic decrease in polymer fluidization temperature with the increase in MFR value when MFR value is over 100 g/10 min. Fluidization temperature here means the temperature at which the elastic modulus drastically decreases or the fracture occurs in measuring elastic modulus with increasing the temperature, and specifically, such temperature is adopted as determined by the measurement result of the temperature variance of dynamic viscoelasticity at a frequency of 35 Hz. In practicality MEA preparation involves assembling a membrane and a gas diffusion electrode. Generally a press machine is frequently used in heating state at a temperature not lower than glass transition temperature of a membrane to enhance assembly and thus the low fluidization temperature of the polymer causes damage to the polymer used as a membrane or a catalyst binder during assembly. For example, in a polymer represented by the general formula (6) with EW of around 1,000, the fluidization temperature thereof gradually decreases with the increase in MFR and down to about 180°C when MFR is around 500 g/10 min although fluidization temperature is as high as around 250°C when MFR value is not higher than 100 g/10 min.

a-5) puncture strength in hot water

A fluorinated sulfonic acid polymer having a monomer unit represented by the general formula (4), if used as a membrane, shows a decrease in membrane strength, in particular in the wet state, when the MFR value is over 100 g/10 min. For example, the puncture strength in 80°C hot water of said polymer significantly decreases with the increase in the MFR. In practical use a membrane is always subjected to compression by rough surface of a catalyst layer in wet condition at operation temperature, which causes severe membrane deterioration when puncture strength is low. For example, in a fluorinated sulfonic acid polymer represented by the general formula (6) with EW of around from 800 to 850, puncture strength decreases to about 1/4, when the MFR is around 700 g/10 min, compared to when the MFR is around 10 g/10 min.

As described above, international publication, WO -A-2004/062019, discloses that as for a membrane for a fuel cell using a polymer expressed by the general formula (1) wherein m=4 and n=0 (that is, a polymer represented by the general formula (6)), a membrane having high EW and high hydration product (HP) of not lower than 22,000 is preferable as a membrane for a fuel cell due to high ion conductivity while having high mechanical strength. However, a membrane with high hydration product disclosed in this publication was found to show a very high membrane dimensional change between the dry and wet states and a very weak membrane strength in the wet state. Furthermore, a membrane with high EW, high proton conductivity cannot be attained. Therefore, a membrane disclosed in the publication, a membrane for a fuel cell with good cell characteristics and high durability cannot be attained. "Hydration product" (HP) here is a parameter defined in said specification and is a product of equivalent of water absorbed by a membrane per 1 equivalent of a sulfonic acid group and EW. The amount of absorbed water is measured maintaining a membrane in boiling water.

A polymer and a membrane thereof disclosed in international publication, WO -A-2004/062019, will be explained in more detail below.

In the Examples of this publicaiton, two membranes consisting of a polymer with hydration product around 40,000 and 4 membranes consisting of a polymer with hydration product around 25,000 are shown. Such membranes with high hydration product (HP) have various problems as already explained in "Prior Art" section, due to very high dimensional change between dry and wet states.

MFRs of polymers of these Examples are not shown in the WO-A-2004/062019 publication, however, it is found that a polymer with hydration product around 40,000 has or MFR of not lower than 500 g/10 min and a polymer with hydration product of around 25,000 has or MFR of not lower than 200 g/10 min, based on Fig. 2 showing the relation between MFR and hydration product described in the above a-2) section. As shown above, every polymer described in the publication has a very high MFR and is far apart from the requirement of a polymer of the present invention, that is "MFR not higher than 100 g/10 min". Therefore, any of membranes disclosed in the Examples of this publication are not suitable to a membrane for a fuel cell, as shown above.

In the WO-A-2004/062019 publication there are neither membrane examples suitable to a membrane for a fuel cell nor explanation concerning MFR of a fluorinated sulfonic acid polymer having a monomer unit represented by the general formula (4) and importance of MFR. Therefore, the present invention, that is "a fluorinated sulfonic acid polymer having a monomer unit represented by the general formula (4) with MFR of not higher than 100 g/10 min is suitable to a solid electrolyte polymer for a fuel cell" is realized by study of the inventors of the present invention for the first time.

Further, the inventors of the present invention have studied in detail the relation of characteristics of said fluorinated sulfonic acid polymer and conditions of membrane formation and characteristics of a membrane obtained to develop a highly-durable membrane for a fuel cell using a fluorinated sulfonic acid polymer having a monomer unit represented by the general formula (4) (including a polymer represented by the general formula (1) wherein m=4 and n=0). As for the results, the inventors of the present invention have found that in case condition (1): as shown above, a polymer of the fluorinated sulfonic acid polymer with MFR of not higher than specific value (for example, not higher than 100 g/10 min) is used and preferably condition (2): product of "EW of a raw material polymer" and "hydration product of a membrane obtained" is in the range from $2\times10^6$ to $23\times10^6$, a membrane with high proton conductivity, small dimensional change between dry and wet states and high mechanical strength in swelled state in water, which are required for a membrane for a fuel cell, can be attained. That is, the product of EW and hydration product is a unified parameter expressing each required characteristics of proton conductivity, dimensional change between dry and wet states and mechanical strength in swelled state in water.

In the membrane for a fuel cell, the required characteristics for the above-described membrane for a fuel cell cannot be satisfied, even when product of EW and hydration product satisfies the above condition (2), if MFR does not satisfy the above condition (1) value (molecular weight not lower than specified value), i.e., MFR is not higher than specified.

As described above, both good fuel cell characteristics and high-durability can not be realized in case of using a membrane with high hydration product and high EW disclosed in the international publication, WO-A-2004/062019. The product of EW and hydration product of a membrane disclosed in the international publication, WO-A-2004/062019, is in the range from $25\times10^6$ to $39\times10^6$. Therefore, these exemplified polymers are excluded from the above condition (2) of the present invention and cannot satisfy the required characteristics for the above-described membrane for a fuel cell. MFR is considered to be out of the range of the above condition (1) because these exemplified polymers are excluded from the above condition (2).

Contrary to these membranes for a fuel cell with high hydration product and high EW which are disclosed in said international publication, WO-A-2004/062019, the present invention relates to a finding that when said fluorinated sulfonic acid polymer with MFR of not higher than specified value is used, a membrane with product of EW and hydration product, which is not higher than specified value (that is, a membrane wherein both EW and hydration product are not high), shows characteristics suitable to a membrane for a fuel cell and enables a high-durable membrane. Therefore, the present invention realizes a high functional membrane for a fuel cell based on a completely opposite concept from the one described in the international publication, WO-A-2004/062019.

Product between EW and hydration product of a membrane for a fuel cell used in the present invention will be explained below.

<product of EW and hydration product>

It was found, as a result of widely comparative study concerning characteristics of membranes with various EW and hydration products by the inventors of the present invention, that as product of EW and hydration product being too high, this makes it difficult to accurately assemble a cell due to a large dimensional change between dry and wet states and also does not make it impossible to obtain a sufficient durability due to insufficient mechanical strength of a wet and swelled membrane, although high proton conductivity is obtained.

However, it was found that as product of EW and hydration product being too low, this makes it impossible to obtain sufficient proton conductivity, although dimensional change between dry and wet states is small and mechanical strength of a wet and swelled membrane increases and thus the preferable and suitable value of product of EW and hydration product is present. That is, in case of using a fluorinated sulfonic acid polymer having a monomer unit represented by the general formula (4) as a membrane, product of EW and hydration product is preferably in the range of from $2\times10^6$ to $23\times10^6$. Upper limit of product of EW and hydration product is preferably $22\times10^6$, further preferably $21\times10^6$, and particularly preferably $20\times10^6$. While the lower limit of product between EW and hydration product is more preferably $3\times10^6$, further preferably $4\times10^6$, and particularly preferably $5\times10^6$.

<hydration product>

In addition, in case of using a fluorinated sulfonic acid polymer having a monomer unit represented by the general formula (4) as a membrane, the upper limit of hydration product is preferably lower than 22,000, more preferably

not higher than 21,000, further preferably not higher than 20,000, further preferably not higher than 19,000 and particularly preferably not higher than 18,000. The lower limit of hydration product is preferably 2,000, more preferably 3,500, and particularly preferably 5,000. The value of hydration product is not necessarily within these ranges when product of EW and hydration product is in the above-described range of from $2\times10^6$ to $23\times10^6$.

Specific conditions should be satisfied to manufacture a membrane material having the value of product of EW and hydration product or the value of hydration product within the above-described preferable range. One of these conditions is the condition of membrane formation and another condition is the condition of molecular weight of a polymer.

<condition of membrane formation>

First, the condition of membrane formation is explained. A method for manufacturing a membrane having product of EW and hydration product within the specified value or a membrane with hydration product within the specified value includes method (a): a method for obtaining melt membrane formation such as press or extrusion and the like in polymer state with a sulfonic acid group converted to a $-SO_2F$ group, followed by saponification and acid treatment; or method (b): a method for obtaining cast membrane formation from a solution or dispersion of a sulfonic acid polymer, followed by annealing treatment at sufficiently high temperature. The dimensional stability or mechanical strength of a membrane thus formed can also be improved by further stretching under various conditions.
The anneal temperature of a cast membrane is not lower than Tg of said sulfonic acid polymer, however, the difference of temperature between the anneal temperature and Tg is preferably large, and when shown specifically by temperature, preferably not lower than 150°C, further preferably not lower than 160°C, further preferably not lower than 170°C, further preferably not lower than 180°C, further preferably not lower than 190°C, and particularly preferably not lower than 200°C. If the anneal temperature is too high, a polymer is decomposed, and thus the anneal temperature is preferably not higher than 250°C, more preferably not higher than 240°C, and further preferably not higher than 230°C. The anneal time is not specifically limited, however, the preferable conditions are not shorter than 10 seconds, not shorter than 30 seconds, not shorter than 1 minute, not shorter than 5 minutes, not shorter than 10 minutes, not shorter than 30 minutes, and not shorter than 1 hour are used for effective annealing. Upper limit of anneal time is not specifically limited, however, the preferable conditions are within 24 hours, within 5 hours, within 1 hour, within 30 minutes, or within 10 minutes are provided to attain an economical manufacturing process. When the anneal temperature or the anneal time of a cast membrane is not sufficient, hydration product of the membrane obtained tends to be high, and therefore provides a membrane with poor mechanical strength or poor dimensional stability in wet and swelled state.

<molecular weight of a polymer>

In case molecular weight of a polymer is not sufficiently large (that is when MFR is larger than the specified value, for example higher than 100 g/10 min), even if these membrane formation methods are used, product of EW and hydration product, or value of hydration product is not within the appropriate range and does not provide sufficient strength and dimensional stability as a membrane for a fuel cell material. In particular, when EW value is low (for example, EW of less than 1,000, less than 950, less than 900, less than 850, and less than 800), molecular weight of a polymer should be sufficiently high, and anneal temperature should be sufficiently high in cast membrane formation for a membrane to obtain product of EW and hydration product, or hydration product in the appropriate range and show characteristics suitable to a solid electrolyte polymer for a fuel cell.
That is, it was found by the inventors of the present invention that in a membrane for a fuel cell consisting of said fluorinated sulfonic acid polymer, even if EW of a membrane is low, a membrane obtained by using a polymer with sufficiently high molecular weight (a polymer with MFR of not higher than specific value) and by annealing at sufficiently high temperature in cast membrane formation, shows high strength and good dimensional change between dry and wet states.
Further, this membrane also has high proton conductivity due to low EW and, also has chemical stability (oxidation resistance, heat stability) and heat resistance (high glass transition temperature) as described above. Therefore, a membrane thus manufactured shows good cell characteristics and is a membrane for a fuel cell showing stable performance even in operation over a long period of time in the range of high temperature.

<EW>

In using a fluorinated sulfonic acid polymer having a monomer unit represented by the general formula (4) as a membrane and/or a catalyst binder for a polymer electrolyte fuel cell, higher sulfonic acid group density (that is, lower ion exchange capacity) is preferable due to providing higher proton conductivity. Therefore, when ion exchange capacity is expressed by equivalent weight (EW) of a value obtained by dividing polymer weight with mole number of a sulfonic acid group, EW is preferably not higher than 1,300 g/equivalent, more preferably not higher than 1,200 g/equivalent,

more preferably not higher than 1,100 g/equivalent, more preferably not higher than 1,000 g/equivalent, more preferably not higher than 950 g/equivalent, more preferably not higher than 900 g/equivalent, more preferably not higher than 890 g/equivalent, more preferably not higher than 850 g/equivalent, more preferably lower than 800 g/equivalent, more preferably not higher than 790 g/equivalent, more preferably not higher than 780 g/equivalent, and particularly preferably not higher than 760 g/equivalent. If the EW value is too low, a lower mechanical strength in wet and swelled state may result or a problem of solubility in water may occur and thus EW is preferably not lower than 600 g/equivalent more preferably not lower than 640 g/equivalent, and most preferably not lower than 680 g/equivalent. Even if EW is in the above-described range, MFR, product of EW and hydration product or hydration product are preferably within the above-described range for said polymer or a membrane consisting of said polymer to show superior mechanical strength or dimensional stability in wet and swelled state.

<glass transition temperature>

Operation temperature is preferably as high as possible because a fuel cell can be operated in small activation over voltage and also a radiator can be made compact in automotive application, in particular. It is also preferable that glass transition temperature of a polymer material such as a polymer for a membrane or a catalyst binder used in a fuel cell is possibly higher than operation temperature of a fuel cell, to securely and stably operate a fuel cell in the range of high temperature. However, glass transition temperature of a polymer, which is mainly used at present, corresponding to the general formula (1) wherein n=1, is 120°C or lower thereof, and therefore the temperature of the operation cannot be set at high temperature. However, it was confirmed by the study of the inventors of the present invention that glass transition temperature of a fluorinated sulfonic acid polymer having a monomer unit represented by the general formula (4) used in the present invention remains at a high level even if said polymer has long side chain structure. That is, it was found that said polymer not only shows, as described above, superior chemical stability, heat resistance, and oxidation resistance, but provides mechanical strength suitable to operation at high temperature. Glass transition temperature of a fluorinated sulfonic acid polymer having a monomer unit represented by the general formula (4) used in the present invention is preferably not lower than 130°C and more preferably not lower than 140°C. Glass transition temperature in the present invention is expressed by temperature providing maximum loss tangent when dynamic viscoelasticity of said polymer is measured at a frequency of 35 Hz.

<thermal decomposition temperature/oxidation resistance>

In a fluorinated sulfonic acid polymer having a monomer unit represented by the general formula (4), initiation temperature of thermal decomposition, when measured by thermogravimetric analysis (TGA) in inert gas and under temperature increasing rate of 10°C/min, is preferably not lower than 340°C, more preferably not lower than 350°C, more preferably not lower than 360°C, more preferably not lower than 370°C, more preferably not lower than 380°C and most preferably not lower than 385°C. Inert gas here is argon, nitrogen and the like and argon is preferable. In this case it is preferable to start measurement when oxygen concentration is not higher than 1000 ppm. The initiation temperature of thermal decomposition by thermogravimetric analysis (TGA) in air and under temperature increasing rate of 10°C/min, is preferably not lower than 330°C, more preferably not lower than 335°C, more preferably not lower than 340°C, more preferably not lower than 345°C, more preferably not lower than 350°C and most preferably not lower than 355°C. In the same TGA, upper limit of the initial temperature of thermal decomposition in inert gas with the increasing rate of 10°C/min is 500°C and upper limit of initial temperature of thermal decomposition in air with the increasing rate of 10°C/min, is 450°C. The initiation temperature of thermal decomposition in the present invention, can be determined in TGA in inert gas or in air with the increasing rate of 10°C/min, by obtaining a temperature-mass curve and as temperature at cross point of tangential lines for a curve before thermal decomposition start and a curve for after thermal decomposition start.

Generally, a sulfonic acid polymer is highly hygroscopic and thus a decrease in mass may be observed before reaching to about 200°C in TGA measurement, however, this is caused by desorption of absorbed water and not by decomposition and thus it is sufficient to consider TGA behavior at substantially not lower than 200°C.

The above-described pyrolysis initiation temperature is preferably 20°C higher, further preferably 30°C higher and most preferably 40°C higher than that of commercial product Nafion (registered trade mark of a product from DuPont Co., U.S.A.) 117 membrane (corresponding to a fluorinated sulfonic acid polymer in-the general formula (1) wherein n=1 and m=2, with ion exchange capacity of 1,100 g/equivalent) or a fluorinated sulfonic acid polymer expressed by the general formula (1) wherein n=1 and m=2, with ion exchange capacity of from 900 to 1,000 g/equivalent.

<amount of fluoride ion generated by oxidative decomposition at high temperature>

Amount of generated fluoride ion when a fluorinated sulfonic acid polymer having a monomer unit represented

by the general formula (4) in membrane state is kept contacting with 80°C air saturated with water for 8 hours at 200°C is preferably not higher than 0.2% by weight based on total fluorine in an original polymer. A membrane of the fluorinated sulfonic acid polymer having about sum thickness is cut out into 3 cm × 3 cm size (about 0.1 g in weight), which is put into a SUS sample tube with inner diameter of 5 mm and length of 5 cm, and both ends thereof are connected with SUS and PTFE pipe lines. The entire sample tube is put in an oven at 200°C and water heated at 80°C is passed through a bubbler at the middle of the SUS pipe line so that humidified air is flowed at 20 ml/min. A dilute NaOH aqueous solution ($6\times10^{-3}$ N) of 8 ml is introduced into the PTFE pipe line at the exit side to collect decomposed substance over 8 hours to quantitatively analyze fluoride ions in the collected liquid by ion chromatography. The amount of fluoride ions in the collected liquid is preferably not higher than 0.2% by weight based on total fluorine in an original fluorinated sulfonic acid polymer, further preferably not higher than 0.1% by weight and particularly preferably not higher than 0.05% by weight. In this case, relatively high concentration of fluoride ion may be collected at the initial stage of decomposition by the effect of impurities and the like in a polymer, however, in that case, the collected amount may be determined for 8 hours after stabilization of collection amount per hour, or the collected amount per hour after stabilization may be converted to value for 8 hours.

The above-described collection amount is preferably not higher that 1/2, further preferably not higher than 1/3, and particularly preferably not higher than 1/4 of the case in similar test on commercial product Nafion (registered trade mark of a product from DuPont Co., U.S.A.) 117 membrane or a 50 μm thick membrane corresponding to the general formula (1) wherein n=1 and m=2, with ion exchange capacity of from 900 to 1,000 g/equivalent.

The above-described test is preferably performed on a polymer with functional terminal group of $-SO_2F$ type by melt membrane formation using a press machine, extruder and the like, followed by saponification, acid treatment to convert the functional terminals to $-SO_3H$ type and sufficient washing with water.

As a fluorinated sulfonic acid polymer used in the present invention, a polymer manufactured by solution polymerization or emulsion polymerization may be used as it is, however, a polymer treated with fluorine gas after polymerization is preferable due to showing high stability.

<activation energy of a decomposition reaction>

In a fluorinated sulfonic acid polymer having a monomer unit represented by the general formula (4), activation energy for a rate determining step reaction in a thermal oxidative decomposition process, obtained by calculation using a density function method is preferably not lower than 40 kcal/equivalent as a unit of a sulfonic acid group, further preferably not lower than 41 kcal/equivalent, and most preferably not lower than 42 kcal/equivalent. The upper limit of activation energy for a rate determining step reaction in a thermal oxidative decomposition process, obtained by calculation using a density general function method is 80 kcal/equivalent.

"Activation energy for a rate determining step reaction in a thermal oxidative decomposition process" which can be a parameter for stability of said fluorinated sulfonic acid polymer is explained below.

Firstly, a hydrogen atom of a sulfonic acid group in said fluorinated sulfonic acid polymer is radically withdrawn by actions of active oxygen species such as an OH radical, singlet oxygen and the like, and activated energy is calculated when a $-SO_3$ radical thus formed attacks a side chain or a main chain to proceed to decomposition. In this case, energy is calculated according to each decomposition steps, which are predictable, and a step providing the maximum value of their energies is adopted as the reaction of a rate determining step, whose energy value is defined to be "activation energy for a rate determining step reaction in a thermal oxidative decomposition process". The inventors of the present invention have found that a fluorinated sulfonic acid polymer with thus calculated "activation energy for a rate determining step reaction in a thermal oxidative decomposition process" within the above-described range, provides very low elution amount of fluoride ion in a thermal decomposition test.

As an activated specie in the present calculation, it is enough to consider an OH radical for calculation.

However, calculation based on a polymer itself is difficult and thus a model compound with simplified structure is used as a substitute in calculation. For example, in the case of a perfluoro-based addition polymer with $-SO_3H$ group at side chain terminal via a spacer, a $(CF_3)_2$ CF-group can be used as a main chain model and a compound with structure of $(CF_3)_2$-CF-(spacer)-$SO_3H$ can be used as a model compound for calculation.

As a calculation program of the present calculation, DMo13 from Accelrys Co., U.S.A. was used, and DNP as a basis function and PW91 model gradient correction potential as electron exchange correlation potential were used, respectively.

In a thermal oxidative decomposition reaction in the present calculation, it is assumed that decomposition proceeds by the attack of $-SO_3$ radicals, generated by a reaction between sulfonic acid groups and active oxygen species as described above, to a side chain or a main chain, however, a position to be attacked depends on compound structure. Activation energy for a rate determining step reaction is calculated for the attack to each position and the attack position providing the minimum value is determined as a reaction point, which value may be adopted as activation energy in the present invention.

The reaction point is almost specified depending on structure, for example, in a polymer derived from perfluorovinyl ether with a sulfonic acid group at a side chain terminal, calculation may be performed at base position in a sulfonic acid side of an ether group as the reaction point. A thermal oxidative decomposition reaction in this case is illustrated below using a compound example with spacer of $(CF_2)_q$ as a model compound.

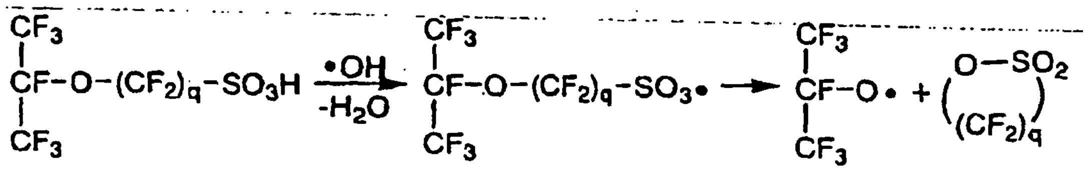

(wherein q is an integer of not smaller than 2)

<ion conductivity>

A fluorinated sulfonic acid polymer having a monomer unit represented by the general formula (4) is used as a membrane and/or a binder for a polymer electrolyte fuel cell and thus ion conductivity thereof is preferably as high as possible. A fluorinated sulfonic acid polymer used in the present invention has ion conductivity, measured in 23°C water as membrane shape, preferably not lower than 0.06 S/cm, more preferably not lower than 0.08 S/cm, further preferably not lower than 0.09 S/cm, and particularly preferably not lower than 0.1 S/cm.
Ion conductivity of a membrane or a polymer in the present invention means proton conductivity in 23°C water on the membrane or a membrane of the polymer prepared by various membrane formation methods as long as not specifically noted.

<percentage of water content>

The percentage of water content is preferably in specified range to provide both high ion conductivity and mechanical strength in wet and swelled state. Typically lower limit of water content at 80°C is preferably not lower than 10% by weight, more preferably not lower than 12% by weight, further preferably not lower than 15% by weight and particularly preferably not lower than 18% by weight. However, as water content at 80°C being too high, this provides too large a dimensional change between dry and wet states and thus the upper limit is preferably not higher than 50% by weight and further preferably not higher than 40% by weight. The percentage of water content at 80°C is obtained by dipping a polymer in 80°C hot water for 30 minutes, followed by wiping off surface water, and is expressed by % value of the value calculated by dividing increment weight from that of a dry polymer, with weight of a dry polymer.
Similarly, absorbed water amount at 100°C determined in measurement of hydration product is also preferably within a specified range. Typically, lower limit of absorbed water amount at 100°C is preferably not lower than 15% by weight, more preferably not lower than 20% by weight and particularly preferably not lower than 25% by weight. However, the upper limit is preferably not higher than 70% by weight and further preferably not higher than 60% by weight. The percentage of water content at 100°C was measured based on weight, when a polymer dried at 110°C for 16 hours was dipped in 100°C hot water for 30 minutes, followed by taking it out, holding in room temperature water for 5 minutes, taking out the membrane, quickly wiping off surface water, in accordance with a method described in JP-A-57-25331. This measurement value is expressed by % value of value obtained by dividing increment weight after wiping off surface water, from weight of a dry polymer, with weight of a dry polymer. In the specification of the present invention, absorbed water amount at 80°C is expressed as "percentage of water content" and absorbed water amount at 100°C is expressed as "absorbed water content".

<small angle X-ray scattering (SAXS)>

The inventors of the present invention have found that a polymer with superior characteristics as a solid electrolyte polymer for a fuel cell (mechanical strength of a membrane swelled in water, dimensional stability between dry and wet state, and the like) has very small scattering intensity at 2 θ of not higher than 1 degree in small angle X-ray scattering measured in water dipping state compared with that of a polymer which is defective in such characteristics. The reason for that is not clear, however, it is estimated thaw scattering at 2 θ of not higher than 1 degree is derived from large water domain which is present in a polymer and amount of such large water domain is considered to affect the property such as the above-described strength and the like. That is, it is considered that a large water domain does

not only participate directly in proton conductivity but also causes strength reduction if the amount of it is too high. Therefore, scattering intensity at 2 θ of not higher than 1 degree is preferably as small as possible, for example, in the case of a fluorinated sulfonic acid polymer represented by the general formula (6), ratio of scattering intensity at 2 θ of 0.3° ($I^2$) to scattering intensity at 2 θ of 3° ($I^1$) , $I^2/I^1$, is preferably not larger than 100, more preferably not larger than 90, further preferably not larger than 80, further preferably not larger than 70, and particularly preferably not larger than 60.

Scattering intensity ratio, $I^2/I^1$, can be determined by measurement of small angle X-ray scattering on a membrane containing water. Typically, as measurement equipment, X-ray scattering instrument using CuKα ray as radiation source and having measurable scattering angle 2 θ, which is wider than at least 0.3°<2 θ< 3°, is used. A detector such as the one currently used, enables to quantitatively detect scattering intensity at each scattering angle, such as a position sensitive type proportional counting tube, an imaging plate, and the like. Scattering measurements are performed at 25°C for a membrane in dipped state in pure water or ion exchanged water. X-ray is injected from perpendicular direction against membrane surface. Measurement results obtained are corrected on scattering from a blank cell and on a slit and the like because the results obtained are independent of measurement conditions. Scattering intensity ratio, $I^2/I^1$, can be determined by obtaining scattering intensity at 2 θ= 0.3° and 3° from scattering intensity distribution thus obtained.

<monomer synthesis methods>

A monomer, as a raw material for a monomer unit represented by the general formula (4), represented by the following general formula (8):

$CF_2$=CFO ($CF_2$) p$SO_2$F (8)

(wherein p is an integer of from 4 to 10) can be synthesized, for example, by the following methods.
One method is a reaction of a compound represented by the following general formula (9):

X ($CF_2$) $_p$OCF=$CF_2$ (9)

(wherein X=Br and I, and p is the same as in the general formula (8)), in double bonds thereof or protected state by chlorine addition or non-protected state, with a compound selected from a dithionite or a thiocyanate salt, followed by converting X to a $SO_2$Cl group by reaction with chlorine, converting to $SO_2$F group by the further reaction with a fluoride salt compound such as NaF, KF and the like and in the case that double bonds are protected a further dechlorination reaction using zinc and the like.

According to an another method, a compound represented by the following general formula (12):

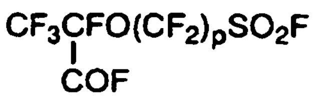

(12)

(wherein p is the same as in the general formula (8)) can be obtained by a compound represented by the following general formula (11):

$FCO(CF_2)_{p-1}SO_2F$ (11)

(wherein p is the same as in the general formula (8)) by oxidation of a compound represented by the following general formula (10):

$I(CF_2)_pSO_2F$ (10)

(wherein p is the same as in the general formula (8)), synthesized by a method described by D. J. Burton et. al., Journal of Fluorine Chemistry, vol. 60, p. 93-100 (1993), by fuming sulfuric acid and the like, followed by a further reaction with hexafluoropropene oxide (HFPO) using KF and the like as a catalyst. This compound is reacted with an alkaline compound such as $K_2CO_3$ and the like for a thermal decarboxylation reaction to obtain a monomer of the general formula (8).

A compound of the general formula (11) can also be synthesized by an electrolytic fluorination reaction of a corresponding cyclic hydrocarbon compound (cyclic sultone compound) precursor, in accordance with the method described in JP-A-57-164991. Further, it can be synthesized by direct fluorination of a cyclic or non-cyclic hydrocarbon compound precursor containing skeleton structure corresponding to a compound of the general formula (11) or partially

fluorinated compound precursor containing skeleton structure corresponding to a compound of the general formula (11).

<methods using as a membrane for a fuel cell>

In membrane electrode assembly for a polymer electrolyte fuel cell of the present invention, a fluorinated sulfonic acid polymer having a monomer unit represented by the general formula (4) and MFR not higher than 100 g/10 min, when the polymer has $-SO_2F$ group instead of $-SO_3H$ group, is used at least as one of a membrane and a catalyst binder.

Firstly, the case the polymer is used as a membrane material is explained.

A membrane having a fluorinated sulfonic acid polymer including a monomer unit represented by the general formula (4) and having MFR at 270°C, when the polymer has $-SO_2F$ group instead of $-SO_3H$ group, not higher than 100 g/10 min, is also in the scope of the present invention.

When said fluorinated sulfonic acid polymer is used as a membrane, membrane thickness is preferably from 5 to 200 μm, more preferably from 10 to 150 μm and most preferably from 20 to 100 μm. Membrane thickness over 200 μm may lower performance of a fuel cell due to increasing electric resistance when such a membrane is used for a fuel cell. Membrane thickness of less than 5 μm may lower performance of a fuel cell due to decreasing membrane strength and increasing fuel gas transmission amount when such a membrane is used for a fuel cell.

General procedure when said fluorinated sulfonic acid polymer is used as a membrane is first obtaining a $SO_2F$ type (co)polymer having a monomer unit represented by the following general formula (13):

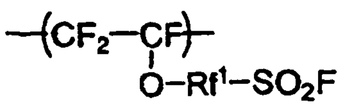

(13)

(wherein $Rf^1$ is the same as $(CF_2)_p$ as in the general, formula (4)), followed by membrane formation using various melt membrane formations, such as press membrane formation or extrusion membrane formation, saponification, and acid treatment and the like to convert to a sulfonic acid group. A sulfonic acid group type polymer manufactured by various methods may be used as a solution or dispersion to form a membrane by a casting method. Annealing treatment at suitable temperature after drying is preferable, in membrane formation by a casting method, due to too low drying temperature provides insufficient membrane strength. Preferable annealing condition is as described in explanation concerning the above-described membrane formation condition.

The fluorinated sulfonic acid polymer may be used alone when used as a membrane material, however, other materials may be compounded for membrane reinforcement or characteristics adjustment. For example, organic fillers such as a fluorocarbon resin and the like such as PTFE and the like, and inorganic fillers such as powders or whisker-like fillers such as silica or alumina and the like can be mixed for reinforcement purpose. Woven fabrics, non-woven fabrics, fibers and the like of a fluorocarbon resin and the like such as PTFE and the like or various aromatic or non-aromatic engineering resins can also be used as core materials. Porous films of a fluorocarbon resin and the like such as PTFE and the like and hydrocarbon based resins impregnated with the fluorinated sulfonic acid polymer may be used as a membrane. On the other hand, other polymers including aromatic group containing polymers such as polyimide, polyphenylene ether and polyphenylene sulfide or various basic group containing polymers typically such as polybenzimidazole and the like may be mixed for adjustment purpose of durability or swelling property.

In any of these cases, when other materials are mixed, ratio of said fluorinated sulfonic acid polymer is preferably not lower than 60% by weight, more preferably not lower than 70% by weight and further preferably not lower than 80% by weight to maintain high proton conductivity. In the case of compounding other materials selected from reinforcing materials including the above-described aromatic group containing polymers, basic group containing polymers, or the above-described organic fillers, inorganic fillers, core materials of woven fabrics, non-woven fabrics and fibers, porous membranes and the like, it is preferable that at least one type selected from aromatic group containing polymers, basic group containing polymers and reinforcing materials, is included in the range of not lower than 0.1% by weight and not higher than 40% by weight. The amount of other materials compounded with said fluorinated sulfonic acid polymer of not higher than 0.1% by weight is not preferable due to providing less addition effect and the amount of not lower than 40% by weight is not preferable due to providing low ion conductivity of said composite membrane.

<solution>

In manufacturing a casting membrane or a catalyst binder consisting of said fluorinated sulfonic acid polymer, the fluorinated sulfonic acid polymer is used as a solution or dispersion thereof. In the case of a polymer represented

by the general formula (1) wherein n=1 and m=2, an apparently colorless and transparent solution type thereof is sold on the market as dispersion and in fact, it is known not a solution type for the polymer but is a dispersion. A similar solution of the fluorinated sulfonic acid polymer can also be prepared and thus in the present invention, an apparently colorless and transparent solution type thereof is named as "a solution or dispersion". In any case, "a solution or dispersion" of a fluorinated sulfonic acid polymer, containing from 0.1 to 50% by weight of a fluorinated sulfonic acid polymer having a monomer unit represented by the general formula (4) and having melt flow rate (MFR) at 270°C, when the polymer has $-SO_2F$ group instead of $-SO_3H$ group, not higher than 100 g/10 min, is a novel one and within the scope of the present invention.

As a solvent for a solution or dispersion of said fluorinated sulfonic acid polymer, water and alcohols such as ethanol, propanol and the like or a fluorinated compound such as a fluorine containing alcohol or a perfluoro hydrocarbon and the like is used alone or as a mixed solvent. The solution or dispersion can be obtained generally by such a manufacturing method as said fluorinated sulfonic acid polymer and a mixed solvent, for example, water and an alcohol are introduced in a pressure vessel, followed by heating at from 150 to 250°C while stirring (herein after named dissolution treatment). The polymer concentration in dissolution treatment is generally from 1 to 20% by weight, however, by dilution or concentration after dissolution treatment, polymer concentration in said solution or dispersion is adjusted to from 0.1 to 50% by weight, preferably from 1 to 40% by weight and further preferably from 5 to 30% by weight. A solution or dispersion can be obtained by solvent substitution even in a system such as water alone or dimethylacetoamide and the like by once preparing a solution or dispersion, even if a solution or dispersion cannot be obtained by direct dissolution treatment.

<MEA>

Then, membrane electrode assembly (hereinafter abbreviated as MEA (Membrane Electrode Assembly)) for a polymer electrolyte fuel cell, using the fluorinated sulfonic acid polymer, is discussed. This MEA is composted of a membrane to be an electrolyte and a gas diffusion electrode to be assembled to this membrane.

A gas diffusion electrode is a unified structured body between an electrode catalyst layer and a gas diffusion layer and in the case for a fuel cell, generally further includes a proton conductive polymer as a catalyst binder. An electrode catalyst consists of a conductive material carrying a catalyst metal and includes a water repellent agent, if necessary.

As a catalyst metal, platinum, palladium, rhodium, ruthenium or an alloy thereof, and the like are used and in many cases, platinum or an alloy thereof is used. Catalyst amount carried is about from 0.01 to 10 $mg/cm^2$ in electrode formation state. As conductive materials, various metals or carbon materials are used and carbon black, graphite and the like are preferable.

The fluorinated sulfonic acid polymer can be used as a binder of this catalyst. A gas diffusion electrode using the fluorinated sulfonic acid polymer as a catalyst binder can be manufactured by the following methods. Firstly, in one method, a solution or dispersion of the fluorinated sulfonic acid polymer is mixed with a conductive material carrying a catalyst, followed by coating thus obtained slurry on a suitable substrate such as a PTFE sheet and the like in thin layer state by a method such as screen printing and a spraying method and the like, and drying. In an another method, a solution or dispersion of said fluorinated sulfonic acid polymer is dipped in a gas diffusion electrode without containing a proton conductive polymer, followed by drying. In said drying operation, just like in membrane formation, annealing at high temperature is effective. Preferable range of annealing conditions (temperature, time) in this case are similar to of annealing conditions in the above-described membrane formation.

The fluorinated sulfonic acid polymer is used as either or both of a membrane and a catalyst binder as a polymer alone or as a polymer mixture.

Assembly between a membrane and a gas diffusion electrode is performed using equipment providing pressurization and heating. It is generally performed using, for example, a hot press machine, a roll press machine and the like. In this case any press temperature is applicable as long as it is not lower than glass transition temperature of a membrane and is generally from 130 to 250°C and preferably from 170 to 250°C. Press pressure depends on hardness of a gas diffusion electrode used, however, is generally from 5 to 200 $kg/cm^2$ and preferably from 20 to 100 $kg/cm^2$.

MEA of the present invention formed as above is incorporated as a fuel cell. A fuel cell using MEA of the present invention is preferably operated at relatively high temperature due to providing enhanced catalytic activity and reduced electrode over voltage. A membrane does not fulfill function without moisture, and thus it must be operated at temperature where control of water content is possible, which makes difficult operation of a fuel cell at very high temperature. Therefore, preferable operation temperature range of a fuel cell is from room temperature to 150°C, preferably from room temperature to 120°C and more preferably from room temperature to 100°C. The biggest feature of a fuel cell using MEA of the present invention is showing equivalent performance at usually operated temperature range of from 70 to 80°C or temperature range of from 80 to 90°C for conventional membranes corresponding to the general formula (1) wherein n=1 and m=2 such as Nafion (registered trade mark) membrane and the like, along with stable operation at high temperature of not lower than 90°C or not lower than 95°C region. It is natural that, a fuel cell using MEA of the present

invention can be operated at mild temperature around room temperature and may be operated temporarily at low temperature not higher than room temperature in such as start up operation of a fuel cell.

MEA of the present invention shows superior durability when incorporated as a fuel cell as described above and operated over long period. Various accelerated tests have generally been proposed to evaluate such durability within short time and a fuel cell using MEA of the present invention shows superior durability even by such accelerated tests. As an example, there is an OCV accelerated test as an evaluation method for durability under conditions of high temperature and low humidity. OCV means "Open Circuit Voltage" and this OCV accelerated test is an accelerated test intending to accelerate chemical deterioration by maintaining a polyelectrolyte membrane in OCV state.

Details of this OCV accelerated test is described in a R&D result report from p.55 to p.57, by Asahi Kasei Corp., Japan, on "R&D on a polymer electrolyte fuel cell (relating to establishment of membrane accelerated evaluation technology and the like)" based on consignment research by General Development Organization of Japan New Energy and Industry Technology. In the present invention, a test is performed at cell temperature of 100°C, both hydrogen gas and air gas are under humidified condition at 50°C and time required for hydrogen gas permeability to reach 10 times value before an OCV test, is evaluated as "durability time", based on which superior durability of a membrane consisting of a fluorinated sulfonic acid polymer having a monomer unit represented by the general formula (4) was confirmed. That is, a membrane consisting of a polymer represented by the general formula (1) wherein n=1 shows only low durability irrespective of this m value due to having low Tg, and a membrane consisting of a polymer with n=0 shows insufficient improvement effect with m=3 against low durability with m=2 and high durability is first fulfilled with m is not lower than 4.

Even in continuous operation test at such conditions as cell temperature of 100°C, both hydrogen gas and air gas are humidified at 60°C, in a pressurized state by 0.3 MPa at anode side and 0.15 MPa at cathode side and current density of 0.3 A/cm$^2$, as another long period of time durability test, a membrane consisting of a fluorinated sulfonic acid polymer having a monomer unit represented by the general formula (4) was found to show superior durability compared with a membrane consisting of a polymer represented by the general formula (1) wherein n=1 and m=2, or a membrane consisting of a polymer with n=0 and m=2.

## Examples

The present invention will be specifically elucidated based on Examples hereinbelow.

### Reference Example 1

Synthesis of $CF_2$=$CFOCF_2CF_2CF_2CF_2SO_2F$ (No.1)

A mixture of 900 g of $ICF_2CF_2CF_2COF$, 39 ml of tetraglyme, 390 ml of adiponitrile and 15 g of potassium fluoride was charged into a 2 liter autoclave, and was added with 633 g of hexafluoropropene oxide (HFPO) over 15 hours while stirring at 0°C. After the reaction, excess HFPO was vented and the bottom layer was taken out of the reaction mixture by liquid separation. The liquid thus obtained was distillated to obtain 1,066 g of $ICF_2CF_2CF_2CF_2OCF(C_F3)COF$.
Boiling point: 77°C (14 kPa)
$^{19}$F-NMR δ ($CFCl_3$ base) : 24.7 (1F), -62. 3 (2F) , -79.9 (1F), -83.7 (3F), -87.2 (1F), -114.8 (2F), -125.7 (2F), -131.7 ppm (1F).

Then, 490 g of $ICF_2CF_2CF_2CF_2OCF(CF_3)COF$ was added drop-wise at 120°C to a 1 liter three-necked flask equipped with a mechanical stirrer and a reflux cooler, containing 276 g of dry potassium carbonate beforehand. Stirring was continued for an hour still after completion of drop-wise addition. Replacing the reflux cooler with a distillation head, the system was heated to 180°C while keeping under 20 kPa. Heating was continued until the distillate stopped coming out, followed by purification of collected liquid by distillation to obtain 335 g of $CF_2$=$CFOCF_2CF_2CF_2cF_2I$.
Boiling point: 79°C (21 kPa)
$^{19}$F-NMR δ ($CFCl_3$ base): -63.4 (2F), -85.5 (2F), -113.7 (1F) , -114.0 (2F), -122.1 (1F), -124.6 (2F), -136.4 ppm (IF).

Subsequently, chlorine gas was blown at from 30 to 60°C into a 1 liter flask equipped with a gas blowing tube and a reflux cooler, containing 335 g of $CF_2$=$CFOCF_2CF_2CF_2CF_2I$ beforehand. Blowing was continued until the raw material was consumed, to obtain 388 g of crude $CF_2ClCFClOCF_2CF_2CF_2CF_2I$.

Crude $CF_2ClCFClOCF_2CF_2CF_2CF_2I$ of 388 g was added drop-wise at room temperature to a 3 liter flask, containing 200 g of sodium dithionite dissolved in 1,500 ml of water-acetonitrile (volume ratio=1:1) beforehand. After stirring for 2 hours, a reaction product was extracted with ethyl acetate. The solvent was distilled off from the ethyl acetate phase to obtain 375 g of crude $CF_2ClCFClOCF_2CF_2CF_2CF_2SO_2Na$.

Chlorine gas was blown at 0°C into 700 ml of water dissolved with 375 g of the above crude $CF_2ClCFClOCF_2CF_2CF_2CF_2SO_2Na$ beforehand. After the raw material was consumed, a liquid layer separated at the bottom was drawn out and subjected to distillation to obtain 262 g of $CF_2ClCFClOCF_2CF_2CF_2CF_2SO_2Cl$.
The thus obtained 262 g of $CF_2ClCFClOCF_2CF_2CF_2CF_2SO_2Cl$ was dissolved in 1 litter of acetonitrile, followed by the

addition of 130 g of KF and heating while stirring at 50°C for 4 hours. After the reaction mixture was added to water, a liquid layer separated at the bottom was drawn out and distilled as it is to obtain 152 g of $CF_2ClCFClOCF_2CF_2cF_2CF_2SO_2F$.

$CF_2ClCFClOCF_2CF_2CF_2CF_2SO_2F$ of 152 g was dissolved in 300 ml of ethanol, followed by the addition of 29 g of zinc powder that was washed with dilute hydrochloric acid and dried in advance, and subjecting to a reaction at 80°C for 1.5 hours. The reaction mixture was cooled to room temperature in air, filtrated, washed with water and then distilled to obtain 110 g of $CF_2{=}CFOCF_2CF_2CF_2CF_2SO_2F$.

Boiling point: 91.8°C (40.4 kPa)

$^{19}$F-NMR δ ($CFCl_3$ base) : 43.8 (1F), -86.9 (2F), -110.0 (2F), -116.8 (1F), -122.2 (2F), -124.3 (1F), -126. 9 (2E), -138.4 ppm (1F).

GC-MS (EI): m/z 283, 169, 131, 119, 100, 69, 67.

Reference Example 2

Synthesis of $CF_2{=}CFOCF_2CF_2CF_2CF_2SO_2F$ (No.2)

A mixture of 300 g of $I(CF_2)_4I$, 675 ml of acetone and 225 ml of water was charged into a 2 liter four-necked flask equipped with a reflux column and a stirrer, which was then placed in an ice bath and added to 86.7 g of $Na_2S_2O_4$ slowly. $^{19}$F-NMR analysis of the reaction mixture after stirring for 3 hours showed generation of 35.3% by mole of $I(CF_2)_4SO_2Na$ and 8.1% by mole of $NaO_2S(CF_2)_4SO_2Na$. After acetone and $I(CF_2)_4I$ were distilled off from the above reaction mixture using an evaporator under reduced pressure, the reaction mixture was added to 300 ml of water and then extracted 3 times with ethyl acetate. The ethyl acetate solution was concentrated under reduced pressure to obtain brown solid, which turned out to be $I(CF_2)_4SO_2Na$ by $^{19}$F-NMR analysis (yield: 35.3%).

The above viscous liquid containing $I(CF_2)_4SO_2Na$ was transferred to a 1 liter four-necked flask equipped with a gas blowing tube and further added with 300 ml of water. The flask was placed in an ice bath and chlorine gas was blown into the liquid to form two separated layers. Separation of the lower layer gave 99.2 g of liquid containing $I(CF_2)_4SO_2Cl$ (yield: 99.6% based on said $I(CF_2)_4SO_2Na$).

The above obtained 99.2 g of $I(CF_2)_4SO_2Cl$ was added with 40.4 g of KF and 200 ml of acetonitrile in a 500 ml flask equipped with a reflux column, followed by stirring at 50°C for 2 hours. Two layers were-separated by adding water to the reaction mixture after completion of the reaction. Separation of the lower layer gave 86.5 g of liquid containing $I(CF_2)_4SO_2F$ (yield: 90.9%).

The above obtained 86.5 g of $I(CF_2)_4SO_2F$ was added with 225 g of 60% fuming sulfuric acid, followed by heating at 60°C under atmospheric pressure for 19 hours and leaving at room temperature to give two separated layers of the reaction mixture and conversion was 89%. The upper layer was separated, washed with concentrated sulfuric acid and then purified by distillation (boiling point: 70°C/75 kPa) to obtain 36.2 g of liquid. The liquid turned out to be $FOC(CF_2)_3SO_2F$ by $^{19}$F-NMR analysis (yield: 61.3%).

$^{19}$F-NMR δ ($CFCl_3$ base): 44.3 ppm (1F), 22.5 ppm (1F), -109.8 ppm (2F), -119.5 ppm (2F), -122.4 ppm (2F).

A mixture of 66.4 g of $FOC(CF_2)_3SO_2F$, 3 ml of tetraglyme, 30 ml of adiponitrile and 1.8 g of potassium fluoride was charged in a 100 ml autoclave and added to 39 g of hexafluoropropylene oxide (HFPO), while stirring at 0°C. The reaction mixture was left for standing after 5 hours from the start of adding HFPO, when gage pressure became 0 MPa, to form two separated layers. The lower layer was separated and distilled under reduced pressure (boiling point=91°C/23 kPa) to obtain 87.1 g of $CF_3CF(COF)O(CF_2)_4SO_2F$ (yield: 82.2%).

Into a 200 ml four-necked flask equipped with a dropping funnel, a Liebig cooler and a collecting flask were charged 11.16 g of potassium carbonate-dried in advance and 20 ml of anhydrous 1,2-dimethoxyethane, followed by drop-wise addition of 30 g of the above $CF_3CF(COF)O(CF_2)_4SO_2F$ slowly, while heating in an oil bath at 40°C under nitrogen gas flow. After continued stirring for 1.5 hours after foaming discontinued, it was confirmed by $^{19}$F-NMR analysis that the raw material had been completely neutralized and converted to $CF_3CF(CO_2K)O(CF_2)_4SO_2F$. 1,2-Dimethoxyethane was distilled off from the reaction mixture under reduced pressure and the residue was dried under reduced pressure by heating at 140°C. When the dried residue containing $CF_3CF(CO_2K)O(CF_2)_4SO_2F$ was heated to 170°C under reduced pressure (12 kPa), a decarboxylation reaction started and distillate began to come out. Temperature was further raised slowly upto 185°C at the end. The obtained liquid was purified by distillation (boiling point: 57°C/13.3 kPa) to obtain 20. 6 g of $CF_2{=}CFO(CF_2)_4SO_2F$ (yield: 80.6%).

$^{19}$F-NMR δ ($CFCl_3$ base): 43.8 ppm (1F), -87.0 ppm (2F), -110.0 ppm (2F), -116.9 ppm (1F), -122.2 ppm (2F), -124.4 ppm (1F), -127.0 ppm (2F), -138.4 ppm (1F).

Reference Example 3

Synthesis of $CF_2=CFOCF_2CF_2CF_2CF_2CF_2CF_2SO_2F$

A mixture of 122 g of $I(CF_2)_6I$, 450 ml of acetone and 50 ml of water was charged into a 2 liter three-necked flask equipped with a reflux column and a stirrer, which was then placed in an ice bath and added to 48 g of $Na_2S_2O_4$ slowly, followed by stirring at 25°C for 2 hours. $^{19}F$-NMR analysis of the reaction mixture showed generation of 68% by mole of $I(CF_2)_6SO_2Na$ and 6% by mole of $NaO_2S(CF_2)_6SO_2Na$. After acetone and water were distilled off from the above reaction mixture, the residue was added to 300 ml of HFC43-10 mee and then filtered to remove a solid material. The HFC43-10 mee was distilled off from the filtrate under reduced pressure to recover 31.6 g of $I(CF_2)_6I$. On the other hand, the solid material was added to 500 ml of water and then extracted 3 times with ethyl acetate. The ethyl acetate solution was concentrated under reduced pressure to obtain solid, which turned out to be $I(CF_2)_6$ $SO_2Na$ by $^{19}F$-NMR analysis.

The above $I(CF_2)_6SO_2Na$ was transferred to a 1 liter three-necked flask equipped with a gas blowing tube and added with 300 ml of water. The flask was placed in an ice bath and chlorine gas was blown into the liquid to form two separated layers. Separation of the lower layer gave 75.1 g of $1(CF_2)_6SO_2Cl$ (yield: 95.2%).

The above obtained 175.1 g of $I(CF_2)_6SO_2Cl$ was added with 24.8 g of KF and 150 ml of acetonitrile in a 500 ml flask equipped with a reflux column, followed by stirring at 50°C for 2 hours. Two layers were separated by adding water to the reaction mixture after completion of the reaction. Separation of the lower layer gave 66.8 g of $I(CF_2)_6SO_2F$ (yield: 91.9%).

The above obtained 129 g of $ICF_2)_6SO_2F$ was added with 269 g of 60% fuming sulfuric acid and heated at 60°C and then 80°C under atmospheric pressure for 8.5 hours to give two separated layers of the reaction mixture and conversion was 100%. The upper layer was separated, washed with concentrated sulfuric acid to obtain 89 g of liquid. The liquid turned out to be $FOC(CF_2)_5SO_2F$ by $^{19}F$-NMR analysis (yield: 93%).

$^{19}F$-NMR 44.3 ppm (1F), 22.5 ppm (1F), -109.7 ppm (2F), -120.0 ppm. (2F), -121:8 ppm (2F), -122.5 ppm (2F), -124. 1 ppm (2F).

A mixture of 79 g of $FOC(CF_2)S_3O_2F$, 3.5 ml of tetraglyme, 35 ml of adiponitrile and 1.45 g of potassium fluoride was charged in a 100 ml autoclave and was added to 41.4 g of HFPO, while stirring at 0°C. At this point conversion was 64%, therefore additional 3.5 ml of tetraglyme was added and then 24.2 g of HFPO was introduced for 3.5 hours while stirring at 0°C. After the reaction, excess HFPO was vented and the content was fractionated to take out the lower layer. Conversion thus attained was 96%. The obtained liquid was distilled to obtain 91.6 g of $CF_3CF(COF)O(CF_2)_6SO_2F$ (yield: 81%).

Into a 200 ml three-necked flask equipped with a dropping funnel were charged 31.9 g of potassium carbonate dried in advance and 1000 ml of anhydrous 1,2-dimethoxyethane, followed by drop-wise addition of 120 g of the above $CF_3CF(COF)O(CF_2)_6SO_2F$ slowly under nitrogen gas flow.

After continued stirring at room temperature for 1 hour and further stirring at 50°C for 1 hour, it was confirmed by $^{19}F$-NMR analysis that the raw material had been completely neutralized and converted to $CF_3CF(CO_2K)O$ $(CF_2)_6SO_2F$. After the reaction liquid was filtered, 1,2-dimethoxyethane was distilled off from the filtrate under reduced pressure and the residue was dried under reduced pressure by heating at 100°C to obtain 122.2 g of $CF_3CF(CO_2K)O$ $(CF_2)_6SO_2F$ (yield: 96%).

When 82 g of $CF_3CF(CO_2K)O(CF_2)_6SO_2F$ was charged into a 200 ml three-necked flask equipped with a distillation column and then heated at from 180 to 200°C under reduced pressure (from 22 to 1.0 kPa) for 5.25 hours, a decarboxylation reaction started and 63.3 g of distillate was obtained. Thus obtained distillate was further purified by distillation to obtain 51.2 g of $CF_2=CFO(CF_2)_6SO_2F$ (yield: 76%).

$^{19}F$-NMR: 43.8 ppm (1F), -86.9 ppm (2F), -110.0 ppm (2F), -117.1 ppm (1F), -121.9 ppm (2F), -123.4 ppm (2F), -124.0 ppm (2F), -124.7 ppm (1F), -127.3 ppm (2F), -138.4 ppm (1F).

Example 1

A 200 ml stainless-steel autoclave was charged with 75 g of $CF_2=CFOCF_2CF_2CF_2CF_2SO_2F$ and 75 g of HFC43-10 mee ($CF_3CHFCHFCF_2CF_3$). The autoclave was sufficiently purged with nitrogen and then replaced with tetrafluoroethylene (TFE). As a polymerization initiator, 0.3 g of a 5% solution of $(CF_3CF_2CF_2COO)_2$ in HFC43-10 mee (which had been stored in a refrigerator) was added and the autoclave was pressurized to 0.33 MPa with TFE. Additional TFE was added as appropriate to keep pressure at 0.33 MPa, while stirring at 35°C. Additional 0.15 g of the 5% solution of $(CF_3CF_2CF_2COO)_2$ in HFC43-10 mee was injected halfway. After 4.5 hours, the autoclave was vented and then the polymerization mixture was added with methanol and filtered. A separated solid material was washed with a mixed solution of HFC43-10 mee/methanol (volume ratio=2/1) and dried to obtain 7.83 g of white solid.

A peak assigned to a $SO_2F$ group was observed in an IR spectrum of this solid, which showed that the solid contained a $SO_2F$ group. It was also confirmed by a $^{19}F$-NMR spectrum that the solid was a copolymer containing a

$CF_2=CFOCF_2CF_2CF_2CF_2SO_2F$ monomer unit and a TFE monomer unit.

Melt flow rate (MFR) of this polymer was 6.46 g/10 minutes, when measured under the conditions of 270°C, 2.16 kg load and 2.09 mm orifice diameter using a D4002 melt index tester manufactured by Dynisco Inc. of USA.

This copolymer was pressed at 270°C to obtain a molded membrane with thickness of 50 μm.

The above membrane was soaked in a solution of KOH/dimethyl sulfoxide/water (weight ratio=30:15:55) at 90°C for an hour to be subjected to a saponification reaction. Subsequently, the membrane was washed with water, soaked in 4N sulfuric acid at 90°C for an hour, washed again with water and dried to obtain a membrane (A-membrane) having an equivalent weight (EW) of 829 g/equivalent.

Proton conductivity of the A-membrane was 0.12 S/cm in 23°C water. Proton conductivity was measured by a 6-probe method in deionized water at 23°C using a 1 x 6 cm membrane sample. Proton conductivities in Examples and Comparative Examples hereinbelow were measured by a similar method.

Water content (%) of the A-membrane was 26%, which was obtained by soaking the A-membrane in 80°C hot water for 30 minutes, to measure weight of the A-membrane after wiping off surface water quickly and divide weight increment from dry polymer weight with dry polymer weight.

Temperature dependence of dynamic viscoelasticity of the A-membrane was measured with a rectangle sample of 30 mm x 3 mm cut out of the A-membrane, under the conditions of temperature range from room temperature to 300°C and 35 Hz frequency, using a dynamic viscoelasticity measuring device "RHEOVIBLON ODV-01-FP" manufactured by A & D Inc., Japan. Maximum loss tangent (Tg) determined by this measurement result was 145°C. This membrane showed sharp decrease in elastic modulus at 193°C during measurement, leading to fracture.

TGA measurement of the A-membrane was performed under temperature increasing rate of 10°C/minute in argon and air atmosphere, using a Shimadzu Thermogravimetric Analyzer TGA-50, manufactured by Shimadzu Corp., Japan. Flow rates of argon and air were each 50 ml/minute. The measurement in argon atmosphere was begun after oxygen concentration decreased to not higher than 1,000 ppm. A temperature-mass curve was obtained using measurement results, on which initial temperature of thermal decomposition was defined as a cross point of tangential lines of the curves before and after initiation of thermal decomposition. Thus determined initial temperatures of thermal decomposition in argon and in air were 393°C and 362°C, respectively.

(measurement of hydration product)

The above A-membrane that was weighed after drying at 110°C for 16 hours, according to a method described in JP-A-57-25331 specification, was soaked in boiling water for 30 minutes and then soaked in water of room temperature for 5 minutes, according to a method described in International publication, WO-A-2004/062019. The membrane was weighed after wiping off surface water quickly. Amount of absorbed water (52% by weight for the A-membrane) was derived from weight increment, by which moles of water per equivalent of a sulfonic acid group was calculated, which was then multiplied with EW value to give hydration product. Hydration product of the A-membrane was 19,900 and product of hydration product and EW was $16.5 \times 10^6$. Dimensional change between dry and wet states was 53%, which was represented by increment ratio of area in wet state based on area in dry state (test of resistance in hot water).

A membrane sample and water were put in a pressure vessel equipped with an inner glass cylinder and heated in an oil bath at 160°C for 3 hours. The membrane was taken out after this vessel was cooled and then dried, which showed no weight change.

(puncture test in 80°C water)

A membrane, swelled in advance in 80°C water for an hour, was fixed by pinching with SUS rings, set in a water bath at 80°C, and subjected to puncture. Puncture strength of the membrane was measured under the conditions of radius of curvature of a needle of 0.5 mm and a penetrating speed of 2 mm/sec, using a KES-G5 Handy Press Testing Device manufactured by KATO TECH Corp., Japan and turned out to be 190 gf when converted to wet membrane thickness of 50 μm.

(measurement of small angle X-ray scattering)

Small angle X-ray scattering of a membrane was measured in soaked state of a membrane in pure water, using a nanoscale Small angle scattering device with CFC, manufactured by Rigaku Corp., Japan. X-ray was injected from perpendicular direction against membrane surface. Ratio ($I^2/I^1$) of scattering intensity, obtained from an observed spectrum, was 9.3, wherein ($I^1$) and ($I^2$) are intensities at 2θ of 3° and 0.3°, respectively.

Example 2

The same autoclave as in Example 1 was charged with 50 g of $CF_2$=$CFOCF_2CF_2CF2CF_2SO_2F$, 100 g of HFC43-10 mee and 0.4 g of a 5% solution of $(CF_3CF_2CF_2COO)_2$ in HFC43-10 mee similarly as in Example 1, and was pressurized to 0.225 MPa with TFE. Polymerization was performed at 35°C for 6.8 hours similarly as Example 1 (additional 0.2 g of a 5% solution of $(CF_3CF_2CF_2COO)_2$ in HFC43-10 mee was injected two times halfway) to obtain 10.46 g of white solid. MFR of the polymer was 14.5 g/10 minutes.

This polymer was subjected to press membrane formation, saponification and acid treatment similarly as in Example 1 to obtain a $-SO_3H$ type membrane (B-membrane), which had ion exchange capacity of 860 g/equivalent. Proton conductivity in 23°C water, water content in 80°C hot water and Tg of the membrane were 0.11 S/cm, 22% and 150°C, respectively.

TGA performed using this sulfonic acid polymer similarly as in Example 1 showed that pyrolysis initiation temperatures in argon and air were 395°C and 364°C, respectively.

The amount of absorbed water of the B-membrane measured similarly as Example 1 was 48% by weight. Hydration product obtained from the above amount of absorbed water was 19,800, and product between hydration product and EW was $17.0\times10^6$. Dimensional change between dry and wet states was 46%.

Scattering intensity ratio, $I^2/I^1$ was 37, when small angle X-ray scattering was measured similarly as Example 1.

Example 3

The same autoclave as in Example 1 was charged with 50 g of $CF_2$=$CFOCF_2CF_2CF_2CF_2SO_2F$, 100 g of HFC43-10 mee and 0.36 g of a 5% solution of $(CF_3CF_2CF_2COO)_2$ in HFC43-10 mee similarly as in Example 1, and was pressurized to 0.325 MPa with TFE. Polymerization was performed at 35°C for 2.9 hours (the polymerization initiator was not additionally injected) to obtain 13.52 g of white solid. MFR of the polymer was 0.11 g/10 minutes.

The polymer was subjected to press membrane formation, saponification and acid treatment similarly as in Example 1, and ion exchange capacity of thus obtained $-SO_3H$ type membrane (C-membrane) was 1,080 g/equivalent. Proton conductivity in 23°C water, water content in 80°C hot water and Tg of the membrane were 0.068 S/cm, 10% and 155°C, respectively.

TGA performed using this sulfonic acid polymer similarly as in Example 1 showed that pyrolysis initiation temperatures in argon and air were 390°C and 367°C, respectively.

The amount of absorbed water of the C-membrane measured similarly as in Example 1 was 25% by weight. Hydration product obtained from the above amount of absorbed water was 16,200, and product between hydration product and EW was $17.5\times10^6$. Dimensional change between dry and wet states was 27%.

Example 4

A 200 ml stainless-steel autoclave was charged with 12.75 g of $CF_2$=$CFOCF_2CF_2CF_2CF_2SO_2F$ and 39 g of HFC43-10 mee. After the autoclave was sufficiently purged with nitrogen, 0.6 g of a 5% solution of $(CF_3CF_2CF_2COO)_2$ in HFC43-10 mee was added as a polymerization initiator, and the autoclave was pressurized to 0.3 MPa with tetrafluoroethylene (TFE). Additional TFE was added as appropriate to keep pressure at 0.3 MPa, while stirring at 23°C. After 1.5 hours, the autoclave was vented and then the polymerization mixture was added with methanol and filtered. A separated solid material was washed with HFC43-10 mee and methanol and dried to obtain 2.42 g of white solid.

The polymer was subjected to press membrane formation, saponification and acid treatment similarly as in Example 1, and ion exchange capacity of thus obtained $-SO_3H$ type membrane (D-membrane) was 1,300 g/equivalent. Proton conductivity in 23°C water, water content in 80°C hot water and Tg of the membrane were 0.044 S/cm, 7% and 156°C, respectively.

The amount of absorbed water of the D-membrane measured similarly as in Example 1 was 16% by weight. Hydration product obtained from the above amount of absorbed water was 15,000, and the product between hydration product and EW was $19.5\times10^6$. Dimensional change between dry and wet states was 19%.

Example 5

The same autoclave as in Example 1 was charged with 75 g of $CF_2$=$CFOCF_2CF_2CF_2CF_2SO_2F$, 75 g of HFC43-10 mee and 0.27 g of a 5% solution of $(CF_3CF_2CF_2COO)_2$ in HFC43-10 mee similarly as in Example 1, and was pressurized to 0.33 MPa with TFE. Polymerization was performed at 35°C for 6.8 hours similarly as in Example 1 (additional 0.14 g of the 5% solution of $(CF_3CF_2CF_2COO)_2$ in HFC43-10 mee was injected two times halfway) to obtain 9.19 g of white solid. MFR of the polymer-was 9.0 g/10 minutes.

The polymer was subjected to press membrane formation, saponification and acid treatment similarly as in

Example 1, and ion exchange capacity of thus obtained -$SO_3H$ type membrane (E-membrane) was 780 g/equivalent. Proton conductivity in 23°C water, water content in 80°C hot water and Tg of the membrane were 0.14 S/cm, 47% and 145°C, respectively.

The amount of absorbed water of the E-membrane measured similarly as in Example 1 was 62% by weight. Hydration product obtained from the above amount of absorbed water was 21,000, and product between hydration product and EW was $16.4 \times 10^6$. Dimensional change between dry and wet states was 49%.

Example 6

A 200 ml stainless-steel autoclave was charged with 30 g of $CF_2=CFOCF_2CF_2CF_2CF_2CF_2CF_2SO_2F$ and 30 g of HFC43-10 mee. After the autoclave was sufficiently purged with nitrogen, 1.0 g of a 5% solution of $(CF_3CF_2CF_2COO)_2$ in HFC43-10 mee was added as a polymerization initiator. The autoclave was purged with tetrafluoroethylene (TFE) and further pressurized to 0.2 MPa with TFE. Additional TFE was added as appropriate to keep pressure at 0.2 MPa, while stirring at 25°C. After 6 hours, the autoclave was vented and then the polymerization mixture was added with methanol and filtered. A separated solid material was washed with HFC43-10 mee and dried to obtain 7.11 g of white solid.

A peak assigned to a $SO_2F$ group was observed in an IR spectrum of the solid, which showed that the solid contained a $SO_2F$ group. It was also confirmed by a $^{19}F$-NMR spectrum that the solid was a copolymer containing a $CF_2=CFOCF_2CF_2CF_2CF_2CF_2CF_2SO_2F$ monomer unit and a TFE monomer unit. MFR of the polymer was 9.5 g/10 minutes.

The polymer was subjected to press membrane formation, saponification and acid treatment similarly as in Example 1, and ion exchange capacity of an obtained -$SO_3H$ type membrane (F-membrane) was 870 g/equivalent. Proton conductivity in 23°C water, water content in 80°C hot water and Tg of the membrane were 0.12 S/cm, 31% and 142°C, respectively.

TGA performed using this sulfonic acid polymer similarly as in Example 1 showed that pyrolysis initiation temperatures in argon and air were 385°C and 373°C, respectively.

The amount of absorbed water of the F-membrane measured similarly as in Example 1 was 51% by weight. Hydration product obtained from the above amount of absorbed water was 21,400, and product of hydration product and EW was $18.6 \times 10^6$. Dimensional change between dry and wet states was 53%.

Example 7

Fragments of 3 cm x 3 cm (0.1 g) were cut out of the membranes (A, B, C, E and F-membranes) each obtained in Examples from 1 to 3 and Examples from 5 to 6 and put in a SUS sample tube-with 5 mm diameter and 5 cm length, and an inlet and an outlet thereof were connected with a stainless steel pipe and a PTFE pipe, respectively. The whole sample tube was put in an oven at 200°C and air was introduced at 20 ml/minute through' the stainless steel pipe. Air was moistened by passing through a bubbler filled with 80°C water halfway of the pipe. The PTFE pipe at the outlet was led to 8 ml of a dilute aqueous solution of NaOH ($6 \times 10^{-3}$ N), and decomposed products continued to be collected at every one hour for 8 hours.

Concentration of fluoride ions in the collected liquids at every one hour turned out to be roughly constant after 4 hours by the measurement of ion chromatography. Amounts of thus generated fluoride ions per 8 hours calculated from the measurement data after 4 hours were as follows:

A-membrane: 0.080% by weight of the total fluorine in the original polymer.
B-membrane: 0.057% by weight of the total fluorine in the original polymer.
C-membrane: 0.055% by weight of the total fluorine in the original polymer.
E-membrane: 0.075% by weight of the total fluorine in the original polymer.
F-membrane: 0.083% by weight of the total fluorine in the original polymer.

Comparative Example 1

A membrane (membrane thickness=45 μm) formed by extruding, at 270°C, a copolymer (k/1 = 5) represented by the following formula (14):

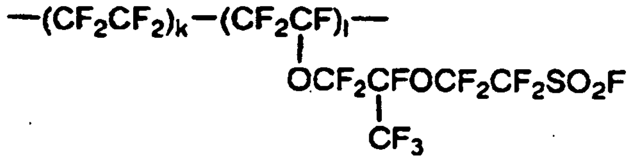

(14)

was subjected to saponification and acid treatment similarly as in Example 1, to obtain a $-SO_3H$ type membrane (membrane thickness=50 μm) having ion exchange capacity of 950 g/equivalent. Proton conductivity in 23°C water, water content in 80°C hot water and Tg of the membrane (P-membrane) were 0.09 S/cm, 23% and 123°C, respectively.

TGA performed using this sulfonic acid polymer similarly as in Example 1 showed that initial temperatures of thermal decomposition in argon and air were 316°C and 314°C, respectively.

A fragment of 3 cm x 3 cm cut out of the membrane was subjected to a decomposition test similarly as in Example 4. Similarly measured concentration of fluoride ions in the collected liquids at every one hour was roughly constant at from 4 to 6 ppm. Amount of thus formed fluoride ions per 8 hours calculated from the measurement data was 0.54% by weight of the total fluorine in the original polymer, which was one order higher than those in Example 7.

Comparative Example 2

A membrane (membrane thickness=45 μm) formed by extruding, at 270°C, a copolymer (k/1 = 4.6) represented by the following formula (15):

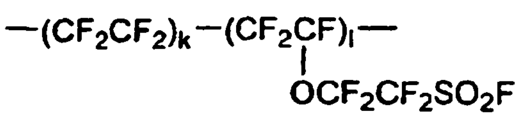

(15)

was subjected to saponification and acid treatment similarly as in Example 1, to obtain a $-SO_3H$ type membrane (membrane thickness=50 μm) having ion exchange capacity of 740 g/equivalent. Proton conductivity in 23°C water, water content in 80°C hot water and Tg of the membrane (Q-membrane) were 0.13 S/cm, 36% and 148°C, respectively.

TGA performed using this sulfonic acid polymer similarly as in Example 1 showed that pyrolysis initiation temperatures in argon and air were 314°C and 319°C, respectively.

A fragment of 3 cm x 3 cm cut out of the membrane was subjected to a decomposition test similarly as in Example 4. Similarly measured concentration of fluoride ions in the collected liquids at every one hour was roughly constant at from 4 to 6 ppm. Amount of thus formed fluoride ions per 8 hours calculated from the data was 0.47% by weight of the total fluorine in the original polymer, which was one order higher than those in Example 7.

Comparative Example 3

TGA performed using a Nafion (registrated trade mark of DuPont Co.) 117 membrane on the market (a membrane of a fluorinated sulfonic acid polymer having 1,100 g/equivalent of ion exchange capacity, manufactured by DuPont Co. and corresponds to the general formula (1), wherein n = 1 and m = 2) similarly as in Example 1 showed that initial temperatures of thermal decomposition in argon and air were 317°C and 312°C, respectively.

Example 8

A density function calculation was performed by setting reactions between each calculation model of (A) : $(CF_3)_2CFOCF_2CF_2SO_3H$, (B) : $(CF_3)_2CFOCF_2CF_2CF_2SO_3H$, (C): $(CF_3)_2CFOCF_2CF_2CF_2CF_2SO_3H$ and (D) : $(CF_3)_2CFOCF_2CF_2CF_2CF_2CF_2CF_2SO_3H$ and an OH radical, assuming a reaction represented by the following formula.

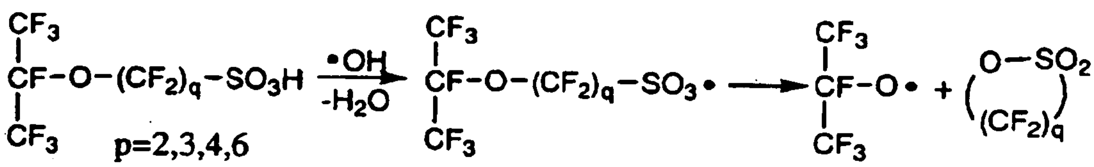


DMol3 of Accelrys Corp., USA as a calculation model, DNP as a base function and gradient correction potential of PW91 type as electron exchange correlation potential were used in the calculation.

Activation energies of rate-determining reactions in oxidative pyrolysis processes of (A): $(CF_3)_2CFOCF_2CF_2SO_3H$, (B): $(CF_3)_2CFOCF_2CF_2CF_2SO_3H$, (C) : $(CF_3)_2CFOCF_2CF_2CF_2CF_2SO_3H$ and (D): $(CF_3)_2CFOCF_2CF_2CF_2CF_2CF_2CF_2SO_{3H}$ were 36.51 kcal/equivalent, 38.99 kcal/equivalent, 43.79 kcal/equivalent and 54.17 kcal/equivalent, respectively, based on a unit of a sulfonic group.

The polymers used in Examples from 1 to 5, the polymer used in Example 6 and the polymer used in Comparative Example 2 correspond to calculation models (C), (D) and (A), respectively. In other words, the above calculation results coincide with tendency of difference in thermal-oxidation resistance shown in comparisons among Examples from 1 to 7 and Comparative Example 2.

Example 9 (accelerated OCV test)

Firstly, an anode side gas diffusion electrode and a cathode side gas diffusion electrode were set in opposing direction, between which the polyelectrolyte membranes (A-membrane and F-membrane) obtained in Examples 1 and 6 were sandwiched, and built in an evaluation cell. The gas diffusion electrode, ELAT® (amount of carried Pt=0.4 mg/$cm^2$, same hereinafter) manufactured by DE NORA NORTH AMERICA Co., USA was coated with a 5% by weight solution of a copolymer (EW=910 g/equivalent) represented by the following formula (16):

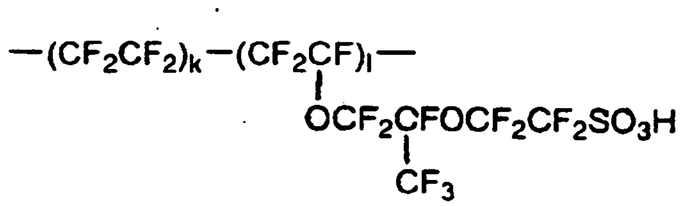
(16)

in water-ethanol (weight ratio=1:1) and then dried to solid at 140°C in air atmosphere. Amount of the carried polymer was 0.8 mg/$cm^2$.

After the evaluation cell was set in an evaluation apparatus (a fuel cell evaluation system 890CL manufactured by TOYO Corp., Japan) and heated, hydrogen gas and air were flowed each at 200 cc/min to the anode side and the cathode side, respectively, keeping the system at OCV (Open Circuit Voltage) state. Both hydrogen gas and air were moistened, using a water-bubbling method for moistening gas, before supplying to each cell.

The test was performed under the conditions of cell temperature at 100°C, gas-moistening temperature at 50°C and no pressurization (atmospheric pressure) in both of the anode and the cathode sides.

Hydrogen gas permeability was measured at every about 10 hours from the test start, using a flow type gas permeability analyzer, GTR-100FA, manufactured by GTR TEC Corp., Japan to examine whether a pinhole was generated in the polymer electrolyte membrane or not. While keeping pressure of the anode side of the evaluation cell at 0.15 MPa with hydrogen gas, argon gas, flowing to the cathode side at the rate of 10 cc/min as a carrier gas together with hydrogen gas that had permeate from the anode side to the cathode side in the cell by a cross-leak, was introduced to gas chromatograph G2800 to quantify permeation amount of hydrogen gas. Permeability L (cc · cm/$cm^2$/sec/Pa) of hydrogen gas is calculated by the following equation:

$$L = (X \times B \times T)/(P \times A \times D)$$

wherein, X (cc) is permeation amount of hydrogen gas; B (= 1.100) is correction factor; T (cm) is thickness of a polymer electrolyte membrane; P (Pa) is partial pressure of hydrogen; A ($cm^2$) is hydrogen permeation surface area of a polymer electrolyte membrane; and D (sec) is measurement time.

The test was terminated when permeability of hydrogen gas amounted to 10 times as high as that before the OCV test.

As the results of the above evaluation, both the A-membrane and the F-membrane showed excellent durability with little leak of hydrogen gas even over 200 hours of test period.

Comparative Example 4

A membrane (membrane thickness=45 μm) formed by extruding, at 270°C, a copolymer (k/l = 5) represented by the following formula (17):

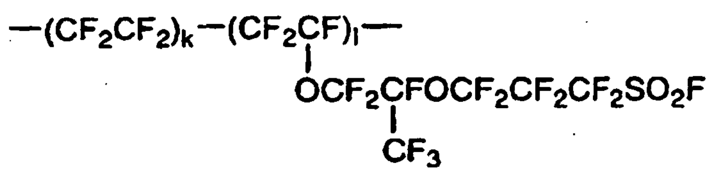

(17)

was subjected to saponification and acid treatment similarly as in Example 1, to obtain a $-SO_3H$ type membrane (membrane thickness=50 μm) having ion exchange capacity of 1,000 g/equivalent. This membrane was named R-membrane.

A membrane (membrane thickness=45 μm) formed by extruding, at 270°C, a copolymer (k/l = 5) represented by the following formula (18):

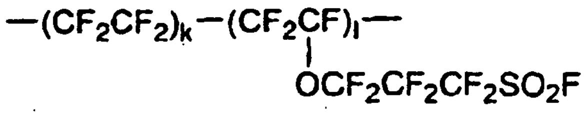

(18)

was subjected to saponification and acid treatment similarly as in Example 1, to obtain a $-SO_3H$ type membrane (membrane thickness=50 μm) having ion exchange capacity of 830 g/equivalent. This membrane was named S-membrane.

An accelerated OCV test was performed similarly as in Example 9 with the membranes (P- and Q-membranes) obtained in Comparative Examples 1 and 2, and the above R- and S-membranes. For the P-membrane and the Q-membrane, hydrogen gas leak increased suddenly after 20 hours from the test start. For the R-membrane and the S-membrane, hydrogen gas leak increased suddenly after 30 hours and 50 hours, respectively from the test start. In other words, both the P-membrane and the R-membrane corresponding to the general formula (1) wherein, n is 1, deteriorated in from 20 to 30 hours, while the Q-membrane for which n is 0 and m is 2 also deteriorated in 20 hours and the S-membrane for which n is 0 and m is 3 withstood a little longer, but deteriorated in 50 hours.

Example 10

Into a 200 ml stainless-steel autoclave equipped with an inner glass cylinder were charged 5.0 g (dry weight) of a $-SO_3H$ type membrane (EW=820, MFR for a $-SO_2F$ type membrane=3.8), produced by repeating the same method as in Example 1, and 95 g of water/ethanol (1/1 by weight) and heated while stirring at 180°C for 4 hours. After cooling to room temperature, it was found, when the vessel was opened, that the entire solid had disappeared and changed to a uniform solution. This solution or dispersion was developed on a Petri dish and dried at 60°C for an hour and then at 80°C for another hour, followed by annealing at 200°C for an hour to form a cast membrane with thickness of 50 μm.

The amount of absorbed water of the cast membrane measured similarly as in Example 1 was 48% by weight. Hydration product obtained from the above amount of absorbed water was 17,900, and product of hydration product and EW was $14.7 \times 10^6$. Dimensional change between dry and wet states was 32%. Namely, little difference could be observed between the cast membrane annealed at 200°C for an hour and the pressed membrane in Example 1.

Example 11

Cast membranes were made from the solution or dispersion prepared in Example 10 under different conditions of drying and annealing. Firstly, a cast membrane with thickness of 30 μm was prepared by drying at 90°C for 10 minutes and then annealing at 200°C for 10 minutes. Amount of absorbed water of this membrane was 49% by weight. Hydration product obtained from the above amount of absorbed water was 18,300, and product of hydration product and EW.was $15.0\times10^6$. Dimensional change between dry and wet states was 33%. Secondly, another 50 μm thick cast membrane was prepared by drying at 60°C for an hour and at 80°C for another hour, followed by annealing at 170°C for an hour. Amount of absorbed water of this membrane was 65% by weight. Hydration product obtained from the above amount of absorbed water was 24,300, and product of hydration product and EW was $19.9\times10^6$. Dimensional change between dry and wet states was 47%. Namely, while little difference could be observed between annealing at 200°C for an hour and annealing at 200°C for 10 minutes, hydration product turned out to be higher for annealing at 170°C.

Example 12

A membrane obtained in Example 6 of 2.5 g (dry weight) and 47.5 g of water/ethanol (1/1 by weight) were charged in a 200 ml stainless-steel autoclave equipped with an inner glass cylinder and heated while stirring at 180°C for 4 hours. After cooling to room temperature, it was found, when the vessel was opened, that the entire solid had disappeared and changed to a uniform solution. This solution or dispersion was developed on a Petri dish and dried at 60°C for an hour and 80°C for another hour, followed by annealing at 200°C for an hour to form a cast membrane with thickness of 50 μm.

The amount of absorbed water of the cast membrane measured similarly as in Example 1 was 51% by weight. Hydration product obtained from the above amount of absorbed water was 21,400, and product of hydration product and EW was $18.6\times10^6$. Dimensional change between dry and wet states was 40%.

Example 13

The same autoclave as in Example 1 was charged with 40 g of $CF_2=CFOCF_2CF_2CF_2CF_2SO_2F$, 80 g of HFC43-10 mee and 1.0 g of a 5% solution of $(CF_3CF_2CF_2COO)_2$ in HFC43-10 mee similarly as in Example 1, and was pressurized to 0.22 MPa with TFE. Polymerization was performed at 35°C for 3 hours similarly as in Example 1 to obtain 5.8 g of white solid. MFR of the polymer was 86.3 g/10 minutes.

The polymer was subjected to press membrane formation, saponification and acid treatment similarly as in Example 1, and ion exchange capacity of thus obtained $-SO_3H$ type membrane was 815 g/equivalent.

The amount of absorbed water of the membrane measured similarly as in Example 1 was 60% by weight. Hydration product obtained from the above amount of absorbed water was 22,200, and product of hydration product and EW was $18.1\times10^6$. Dimensional change between dry and wet states was 55%.

When measured by a resistance test in 160°C hot water similarly as in Example 1, weight of this membrane turned out to be reduced by 9% after the test. A puncture test of this membrane performed in 80°C water similarly as in Example 1 showed 92 gf of puncture strength, when converted to the base of 50 μm thick wet membrane.

Small angle X-ray scattering measured similarly as in Example 1 showed ratio of scattering intensity, $I^2/I^1$, to be 49.

Example 14

The same autoclave as in Example 1 was charged with 40 g of $CF_2=CFOCF_2CF_2CF_2CF_2SO_2F$, 80 g of HFC43-10 mee and 0.8 g of a 5% solution of $(CF_3CF_2CF_2COO)_2$ in HFC43-10 mee similarly as in Example 1, and was pressurized to 0.22 MPa with TFE. Polymerization was performed at 25°C for 5.3 hours similarly as in Example 1 to obtain 13.3 g of white solid. MFR of the polymer was 0.03 g/10 minutes.

The polymer was subjected to press membrane formation, saponification and acid treatment similarly as in Example 1, and ion exchange capacity of thus obtained $-SO_3H$ type membrane was 1045 g/equivalent.
This membrane had Tg of 144°C and showed sharp drop of elastic modulus at 243°C during measurement, leading to fracture.

The amount of absorbed water of the membrane measured similarly as in Example 1 was 25% by weight. Hydration product obtained from the above amount of absorbed water was 15,000, and product of hydration product and EW was $15.7\times10^6$. Dimensional change between dry and wet states was 28%. A puncture test of this membrane performed in 80°C water similarly as in Example 1 showed puncture strength of 308 gf, when converted to the base of 50 μm thick wet membrane.

Small angle X-ray scattering measured similarly as in Example 1 showed ratio of scattering intensity, $I^2/I^1$, to

be 38.

Example 15

The same autoclave as in Example 1 was charged with 40 g of $CF_2$=$CFOCF_2CF_2CF_2CF_2SO_2F$, 80 g of HFC43-10 mee and 1.0 g of a 5% solution of $(CF_3CF_2CF_2COO)_2$ in HFC43-10 mee similarly as in Example 1, and was pressurized to 0.30 MPa with TFE. Polymerization was performed at 35°C for 2.25 hours similarly as in Example 1 to obtain 12.5 g of white solid. MFR of the polymer was 1.6 g/10 minutes.

The polymer was subjected to press membrane formation, saponification and acid treatment similarly as in Example 1, and ion exchange capacity of thus obtained $-SO_3H$ type membrane was 997 g/equivalent. This membrane had Tg of 147°C and showed sharp drop of elastic modulus at 249°C during measurement, leading to fracture.

The amount of absorbed water of the membrane measured similarly as in Example 1 was 32% by weight. Hydration product obtained from the above amount of absorbed water was 17,800, and product of hydration product and EW was $17.7\times10^6$. Dimensional change between dry and wet states was 36%.

Small angle X-ray scattering measured similarly as in Example 1 showed ratio of scattering intensity, $I^2/I^1$, to be 49.

Example 16 (evaluation as a fuel cell)

Durability evaluation of a polyelectrolyte membrane for a fuel cell was performed as follows. An electrode catalyst layer was prepared as described bellow. Carbon carrying Pt (TEC10E40E manufactured by TANAKA Precious Metals Corp., Japan, Pt=36.4% by weight) of 1.00 g was added with 3.31 g of a polymer solution which was thickened to 11% by weight from 5% by weight solution of a copolymer (EW=910 g/equivalent) represented by the formula (16) dissolved in water-ethanol (weight ratio=1:1), and then 3.24 g of ethanol, followed by sufficient mixing with a homogenizer to obtain electrode ink. The electrode ink was coated on a PTFE sheet by a screen printing method. Two kinds of coating amount were applied: one is 0.15 mg/$cm^2$ in both of the carried Pt and the carried polymer and another is 0.30 mg/$cm^2$ in both of the carried Pt and the carried polymer. Electrode catalyst layers with thickness of about 10 $\mu$m were obtained by drying the PTFE sheet at room temperature for an hour and at 120°C in air for an hour. The electrode with coating amount of 0.15 mg/$cm^2$ for both of the carried Pt and the carried polymer was used as an anode catalyst layer, while the electrode with coating amount of 0.30 mg/$cm^2$ for both of the carried Pt and the carried polymer was used as a cathode catalyst layer.

The thus obtained anode catalyst layer and cathode catalyst layer were set in opposing direction between which a polymer electrolyte membrane was sandwiched. The anode catalyst layer and the cathode catalyst layer were transferred to the polymer electrolyte membrane by hot-pressing at 160°C under face pressure of 0.1 MPa and then assembled to manufacture a MEA.

Carbon cloth (ELAT: registrated trade mark B-1, manufactured by DE NORA NORTH AMERICA, USA) was attached to both sides (external surfaces of the anode catalyst layer and the cathode catalyst layer) of this MEA as a gas-diffusion layer and built in an evaluation cell. After this evaluation cell was set in an evaluation apparatus (a fuel cell evaluation system 890CL, manufactured by TOYO Corp., Japan) and heated to 80°C, hydrogen gas and air were supplied at 260 cc/min to the anode side and at 880 cc/min to the cathode side, respectively, pressurizing both the anode side and the cathode side to 0.20 MPa (absolute pressure). Hydrogen gas and air were moistened by a water-bubbling method at 90°C and at 80°C, respectively, using a water bubbling method for gas moistening, before supplying to each cell. Under these conditions, a current-voltage curve was measured to examine initial characteristics.

After examining the initial characteristics, a durability test was performed at cell temperature of 100°C. Both gases were moistened at 60°C. Electricity was generated at current density of 0.3 A/$cm^2$ under the conditions that the anode side was supplied with hydrogen gas at flow rate of 74 cc/min and pressurized at 0.30 MPa (absolute pressure), while the cathode side was supplied with air at flow rate of 102 cc/min and pressurized at 0.15 MPa (absolute pressure). For 1 minute in every 10 minutes, current was made 0 by opening the circuit to examine OCV (open-circuit voltage).

When a pinhole is generated in a polymer electrolyte membrane during a durability test, phenomenon called cross-leak occurs, where a large amount of hydrogen gas leaks to the cathode side. Hydrogen concentration in exhaust gas from the cathode side was measured with microGC (CP4900, manufactured by Varian Inc., Holland) to check this cross-leak level. The test was terminated when the measured value rose remarkably.

Performance of the cast membrane prepared in Example 10 for a fuel cell was evaluated by the above evaluation method. The result showed such good initial characteristics as current density of 1.20 A/$cm^2$ at cell temperature of 80°C and voltage of 0.6 V. The durability test showed excellent durability of not shorter than 500 hours at cell temperature of 100°C.

Example 17

Performance of the membrane prepared in Example 1 for a fuel cell was evaluated similarly as in Example 16. The result showed such good initial characteristics as current density of 1.20 A/$cm^2$ at cell temperature of 80°C and voltage of 0.6 V. The durability test showed excellent durability of not shorter than 500 hours at cell temperature of 10°C.

Example 18

Performance of the membrane prepared in Example 12 for a fuel cell was evaluated similarly as in Example 16. The result showed such good initial characteristics as current density of 1.20 A/$cm^2$ at cell temperature of 80°C and voltage of 0.6 V. The durability test showed excellent durability of not shorter than 500 hours at cell temperature of 100°C.

Comparative Example 5

The membrane of 5.0 g (dry weight), obtained in Comparative Example 2 and 95 g of water/ethanol (1/1 by weight) were charged in a 200 ml stainless-steel autoclave equipped with an inner glass cylinder and heated while stirring at 180°C for 4 hours. After cooling to room temperature, it was found, when the vessel was opened, that the entire solid had disappeared and changed to a uniform solution. This solution or dispersion was developed on a Petri dish and dried at 60°C for an hour and 80°C for another hour, followed by annealing at 200°C for an hour to form a 50 μm thick cast membrane.
Performance of thus obtained cast membrane for a fuel cell was evaluated similarly as in Example 16. The result showed such good initial characteristics as current density of 1.20 A/$cm^2$ at cell temperature of 80°C and voltage of 0.6 V. On the other hand, the durability test showed rapid rise of cross-leak at cell temperature of 100°C after 280 hours of operation, leading to termination of the test. As observed above, sufficient durability could not be obtained, although initial characteristics were good.

Example 19

The gas diffusion electrode, ELAT ® (amount of carried Pt=0.4 mg/$cm^2$) manufactured by DE NORA NORTH AMERICA, USA was coated with the solution or dispersion prepared in Example 10 so that the amount of the carried polymer might be 0.8 mg/$cm^2$ and then dried to solid at 140°C for an hour and then at 200°C for another 30 minutes in air to obtain a gas diffusion electrode for electrode evaluation.
The amount of hydrogen gas leak rose sharply after 60 hours of operation in an accelerated OCV test performed similarly as in Example 9 using the membrane (P-membrane) obtained in Comparative Example 1 and the above gas diffusion electrode.

Comparative Example 6

An accelerated OCV test was performed with the gas diffusion electrode prepared similarly as in Example 19 except that the solution or dispersion prepared in Comparative Example 5 was used instead of the solution or dispersion prepared in Example 10. Amount of hydrogen gas leak rose sharply after 20 hours of operation.

Example 20

An evaluation test for a fuel cell was performed similarly as in Example 16, except that the solution or dispersion obtained in Example 10 was used to prepare electrode ink instead of a 5% by weight solution of a copolymer (EW=910 g/equivalent) represented by formula (16) in water-ethanol (weight ratio=1:1). The result showed such good initial characteristics as current density of 1.20 A/$cm^2$ at cell temperature of 80°C and voltage of 0.6 V. The durability test showed excellent durability of not shorter than 500 hours at cell temperature of 100°C.

Example 21

The same autoclave as in Example 1 was charged with 40 g of $CF_2=CFOCF_2CF_2CF_2CF_2SO_2F$, 80 g of HFC43-10 mee, 3.1 g of a 5% solution of $(CF_3CF_2CF_2COO)_2$ in HFC43-10 mee and 0.05 g of methanol similarly as in Example 1, and pressurized to 0.30 MPa with TFE. Polymerization was performed at 35°C for 1.5 hours similarly as in Example 1 to obtain 8.0 g of white solid. MFR of the polymer was 72 g/10 minutes.
The polymer was subjected to press membrane formation, saponification and acid treatment similarly as in Example 1, and ion exchange capacity of thus obtained $-SO_3H$ type membrane was 965 g/equivalent. This membrane

had Tg of 145°C and showed a sharp drop of elastic modulus at 234°C during measurement, leading to fracture.

The amount of absorbed water of the membrane measured similarly as in Example 1 was 41% by weight. Hydration product obtained from the above amount of absorbed water was 21,200, and product of hydration product and EW was $20.5\times10^6$. Dimensional change between dry and wet states was 38%. In hot water resistance test at 160°C similarly as in Example 1, weight of this membrane decreased by 4% after the test. The puncture test of this membrane performed in 80°C water similarly as in Example 1 showed 132 gf of puncture strength converted to wet membrane thickness of 50 μm.

Comparative Example 7

The same autoclave as in Example 1 was charged with 40 g of $CF_2=CFOCF_2CF_2CF_2CF_2SO_2F$, 80 g of HFC43-10 mee, 3.1 g of a 5% solution of $(CF_3CF_2CF_2COO)_2$ in HFC43-10 mee and 0.08 g of methanol similarly as in Example 1, and pressurized to 0.3 MPa with TFE. Polymerization was performed at 35°C for 1.6 hours similarly as in Example 1 to obtain 9.5 g of white solid. MFR of the polymer was 600 g/10 minutes.

The polymer was subjected to press membrane formation, saponification and acid treatment similarly as in Example 1, and ion exchange capacity of thus obtained $-SO_3H$ type membrane was 1,035 g/equivalent. This membrane had Tg of 145°C and showed sharp drop of elastic modulus at 178°C during measurement, leading to fracture. Namely, fracture temperature was much lowered compared with Example 13.

The amount of absorbed water of the membrane measured similarly as in Example 1 was 54% by weight. Hydration product obtained from the above amount of absorbed water was 32,200, and product of hydration product and EW was $33.3\times10^6$. Dimensional change between dry and wet states was 59%.

In hot water resistance test at 160°C similarly as in Example 1, weight of this membrane decreased by 32% during the test. The puncture test of this membrane performed in 80°C water similarly as in Example 1 showed 44 gf of puncture strength converted to wet membrane thickness of 50 μm.

Small angle X-ray scattering measured similarly as in Example 1 showed ratio of scattering intensity, $I^2/I^1$, to be 164.

Comparative Example 8

The same autoclave as in Example 1 was charged with 40 g of $CF_2=CFOCF_2CF_2CF_2CF_2SO_2F$, 80 g of HFC43-10 mee and 5.32 g of 5% $(CF_3CF_2CF_2COO)_2$ solution of HFC43-10 mee similarly as in Example 1, and pressurized to 0.23 MPa with TFE. Polymerization was performed at 35°C for 1.5 hours similarly as in Example 1 to obtain 8.5 g of white solid. MFR of the polymer was 720 g/10 minutes.

The polymer was subjected to press membrane formation, saponification and acid treatment similarly as in Example 1, and ion exchange capacity of thus obtained $-SO_3H$ type membrane was 843 g/equivalent. This membrane had Tg of 142°C and showed sharp drop of elastic modulus at 163°C during measurement, leading to fracture.

The amount of absorbed water of the membrane measured similarly as in Example 1 was 84% by weight. Hydration product obtained from the above amount of absorbed water was 33,000, and product of hydration product and EW was $27.8\times10^6$. Dimensional change between dry and wet states was 90%.

In hot water resistance test at 160°C similarly as in Example 1, the membrane was torn badly during the test and thus its weight could not be measured. The puncture test of this membrane performed in 80°C water similarly as in Example 1 showed 48 gf of puncture strength converted to wet membrane thickness of 50 μm.

Small angle X-ray scattering measured similarly as in Example 1 showed ratio of scattering intensity, $I^2/I^1$, to be 131.

Comparative Example 9

The same autoclave as in Example 1 was charged with 40 g of $CF_2=CFOCF_2CF_2CF_2CF_2SO_2F$, 80 g of HFC43-10 mee, 3.1 g of a 5% solution of $(CF_3CF_2CF_2COO)_2$ in HFC43-10 mee and 0.06 g of methanol similarly as in Example 1, and pressurized to 0.30 MPa with TFE. Polymerization was performed at 35°C for 1.5 hours similarly as in Example 1 to obtain 9.4 g of white solid. MFR of the polymer was 204 g/10 minutes.

The polymer was subjected to press membrane formation, saponification and acid treatment similarly as in Example 1, and ion exchange capacity of thus obtained $-SO_3H$ type membrane was 986 g/equivalent. This membrane had Tg of 144°C and showed sharp drop of elastic modulus at 189°C during measurement, leading to fracture.

The amount of absorbed water of the membrane measured similarly as in Example 1 was 43.5% by weight. Hydration product obtained from the above amount of absorbed water was 23,500, and product between hydration product and EW was $23.2\times10^6$. Dimensional change between dry and wet states was 40%. In hot water resistance test at 160°C similarly as in Example 1, weight of this membrane decreased by 12% during the test.

Reference Example 4

The solution or dispersion (No. 1 liquid) obtained in Example 10 was added with dimethylacetoamide (hereinafter, referred to as DMAc), refluxed at 120°C for an hour and then concentrated under reduced pressure in an evaporator to prepare a solution (No. 2 liquid) of polymer/DMAc = 1.5/98.5 (weight ratio). On the other hand, poly[2,2'-(m-phenylene)-5,5'-bibenzimidazole] (produced by Sigma Aldrich Japan Corp., hereinafter referred to as PBI) was dissolved in DMAc at 200°C in an autoclave and further diluted with DMAc to prepare a solution (No. 3 liquid) with composition of PBI/DMAc = 1/99 (% by weight).

Subsequently, 10 g of the No. 2 liquid was added with 1.63 g of the No. 3 liquid, mixed, and then added with 9.7 g of the No. 1 liquid while stirring and concentrated at 80°C under reduced pressure to obtain cast liquid. Concentrations of the polymer and PBI in the cast liquid are 5.5% by weight and 0.14% by weight, respectively.

The cast liquid was developed on a Petri dish and dried at 60°C for an hour and at 80°C for another hour, followed by annealing at 200°C for an hour to form a cast membrane with thickness of 50 μm.

A fragment of 3 cm x 3 cm cut out of the membrane was subjected to a decomposition test similarly as in Example 4. Concentration of fluoride ions similarly measured in the collected liquids at every one hour was roughly constant after 4 hours of the operation. Amount of thus formed fluoride ions in 8 hours calculated from the data was 0.038% by weight of the total fluorine in the original polymer, which was reduced to half by adding PBI compared with that in Example 7.

Relations between MFRs and hydration products obtained in Examples 1, 2, 3, 6, 13, 14, 15 and 21 as well as Comparative Examples 7, 8 and 9 were summarized in Figure 2.

Small angle X-ray spectra measured by soaking the membranes, obtained in Examples 1 and 15 as well as Comparative Examples 7 and 8, in water were summarized in Figure 3.

Industrial Applicability

The present invention is based on the findings that a fluorinated sulfonic acid polymer having specific structure of side chains and a specific range of molecular weight is qualified as a material that has superior chemical stability (oxidation resistance, heat stability), high heat resistance, high proton conductivity, as well as high mechanical strength, and small dimensional change between dry and wet states. The present invention can be used for a membrane electrode assembly for a polymer electrolyte fuel cell superior in durability and, in particular, suitable to operation in high temperature region, characterized by using the fluorinated sulfonic acid polymer as at least one of a membrane and a catalyst binder, and relating parts materials thereof.

Brief Description of the Drawings

Figure 1 shows TGA data in air of the fluorinated sulfonic acid polymers in Example 1 and Comparative Example 2.
Figure 2 shows relation between MFR value and hydration product of the fluorinated sulfonic acid polymer represented by the general formula (6).
Figure 3 shows small angle X-ray spectra measured by soaking in water a membrane, comprising the fluorinated sulfonic acid polymer represented by the general formula (6). The causes labeled as Figures A, B, C and D show spectra of the membranes of Example 1, Comparative Example 8, Example 15 and Comparative Example 7, respectively.

## Claims

1. A membrane electrode assembly for a polymer electrolyte fuel cell **characterized by** using, as solid polyelectrolyte of at least one of a membrane and a catalyst binder, a fluorinated sulfonic acid polymer with a monomer unit represented by the following general formula (4):

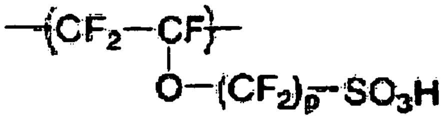

(4)

wherein p is an integer of from 4 to 8, and with a tetrafluoroethylene unit, wherein the polymer having $-SO_2F$ group instead of $-SO_3H$ group of said fluorinated sulfonic acid polymer has melt flow rate (MFR) of not higher than 100 g/10 min at 270 °C, **characterized in that** the fluorinated sulfonic acid polymer has glass transition temperature of not lower than 130 °C and has ion exchange capacity of from 600 to 1,300 g/equivalent.

2. The membrane electrode assembly according to Claim 1, **characterized in that** the fluorinated sulfonic acid polymer has initial temperature of thermal decomposition of not lower than 330°C and not higher than 450 °C when the temperature is raised at 10 degrees/min in air by thermogravimetric analysis.

3. The membrane electrode assembly according to Claim 1 or 2, **characterized in that** in the fluorinated sulfonic acid polymer, the generated amount of fluoride ions is not higher than 0.3% by weight based on the total amount of fluorine in the original fluorinated sulfonic acid polymer when the polymer in a shape of membrane continues to be contacted with air saturated with 80°C water at 200 °C for 8 hours.

4. The membrane electrode assembly according to any one of Claims 1 to 3, **characterized in that** in the fluorinated sulfonic acid polymer, activation energy for a rate determining step of the reaction in the process of thermal oxidative decomposition obtained by calculation using a density functional method is not lower than 40 kcal/equivalent and not higher than 80 kcal/equivalent on the basis of a sulfonic acid group.

5. The membrane electrode assembly according to Claim 1, wherein p is 4 or 6 in the general formula (4).

6. The membrane electrode assembly according to any one of Claims 1 to 5, wherein the fluorinated sulfonic acid polymer has an ionic conductivity in water at 23°C of not lower than 0.06 S/cm.

7. The membrane electrode assembly according to any one of Claims 1 to 6, wherein the fluorinated sulfonic acid polymer has an ionic conductivity in water at 23 °C of not lower than 0.1 S/cm.

8. The membrane electrode assembly according to any one of Claims 1 to 7, **characterized in that** in the fluorinated sulfonic acid polymer in the general formula (4) p is 4 and the ratio of scattering intensity ($I^2/I^1$) is not higher than 100, wherein $I^1$ is the scattering intensity at 2θ of 3° and $I^2$ is the scattering intensity at 2θ of 0.3°, when the polymer dipped in water is measured with small angle X ray scattering.

**Patentansprüche**

1. Membran-Elektroden-Einheit für eine Polymerelektrolyt-Brennstoffzelle, **dadurch gekennzeichnet, dass** als fester Polyelektrolyt einer Membran und/oder eines Katalysatorbindemittels ein fluoriertes Sulfonsäurepolymer verwendet wird mit einer Monomereinheit, die durch die folgende allgemeine Formel (4) dargestellt wird:

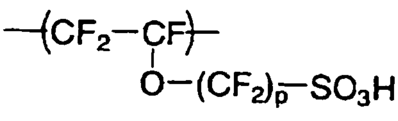

(4)

wobei p eine ganze Zahl von 4 bis 8 ist, und mit einer Tetrafluorethylen-Einheit, wobei das Polymer des fluorierten Sulfonsäurepolymers, das $-SO_2F$-Gruppen anstelle von $-SO_3H$-Gruppen aufweist, einen Schmelzindex (MFR) von nicht mehr als 100 g/10 min bei 270 °C hat, **dadurch gekennzeichnet, dass** das fluorierte Sulfonsäurepolymer

eine Glasübergangstemperatur von nicht weniger als 130 °C aufweist und eine Ionenaustauschkapazität von 600 bis 1300 g/Äquivalent aufweist.

2. Membran-Elektroden-Einheit gemäß Anspruch 1, **dadurch gekennzeichnet, dass** das fluorierte Sulfonsäurepolymer eine Anfangstemperatur der thermischen Zersetzung von nicht weniger als 330°C und nicht mehr als 450°C aufweist, wenn die Temperatur bei der thermogravimetrischen Analyse um 10 Grad/min in Luft erhöht wird.

3. Membran-Elektroden-Einheit gemäß Anspruch 1 oder 2, **dadurch gekennzeichnet, dass** in dem fluorierten Sulfonsäurepolymer die erzeugte Menge an Fluorid-Ionen nicht größer als 0,3 Gew.-% ist, bezogen auf die Gesamtmenge an Fluor in dem ursprünglichen fluorierten Sulfonsäurepolymer, wenn das Polymer in Membranform 8 Stunden lang bei 200°C fortdauernd mit Luft in Kontakt gebracht wird, die mit Wasser von 80°C gesättigt ist.

4. Membran-Elektroden-Einheit gemäß einem der Ansprüche 1 bis 3, **dadurch gekennzeichnet, dass** in dem fluorierten Sulfonsäurepolymer die Aktivierungsenergie für den geschwindigkeitsbestimmenden Schritt der Reaktion bei dem Vorgang der thermischen oxidativen Zersetzung, die durch Berechnung mit Hilfe einer Dichtefunktionsmethode erhalten wird, nicht kleiner ist als 40 kcal/Äquivalent und nicht höher ist als 80 kcal/Äquivalent auf der Basis einer Sulfonsäuregruppe.

5. Membran-Elektroden-Einheit gemäß Anspruch 1, wobei p in der allgemeinen Formel (4) gleich 4 oder 6 ist.

6. Membran-Elektroden-Einheit gemäß einem der Ansprüche 1 bis 5, wobei das fluorierte Sulfonsäurepolymer eine Ionenleitfähigkeit in Wasser bei 23 °C von nicht weniger als 0,06 S/cm aufweist.

7. Membran-Elektroden-Einheit gemäß einem der Ansprüche 1 bis 6, wobei das fluorierte Sulfonsäurepolymer eine Ionenleitfähigkeit in Wasser bei 23 °C von nicht weniger als 0,1 S/cm aufweist.

8. Membran-Elektroden-Einheit gemäß einem der Ansprüche 1 bis 7, **dadurch gekennzeichnet, dass** in dem fluorierten Sulfonsäurepolymer in der allgemeinen Formel (4) p gleich 4 ist und das Verhältnis der Streuintensität ($I^2/I^1$) nicht höher als 100 ist, wobei $I^1$ die Streuintensität bei einem 2θ von 3° ist und $I^2$ die Streuintensität bei einem 2θ von 0,3° ist, wenn das in Wasser eingetauchte Polymer mit Kleinwinkelröntgenstreuung gemessen wird.

## Revendications

1. Assemblage membrane-électrodes pour une pile à combustible à électrolyte polymère, **caractérisé en ce que** l'on utilise comme polyélectrolyte solide de la membrane et/ou du liant de catalyseur un polymère d'acide sulfonique fluoré avec un motif monomère représenté par la formule générale (4) suivante :

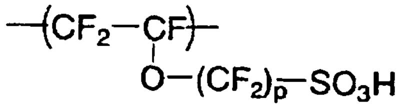

(4)

où p est un nombre entier de 4 à 8, et avec un motif de tétrafluoroéthylène, dans lequel le polymère ayant des groupes $-SO_2F$ au lieu de groupes $-SO_3H$ dudit polymère d'acide sulfonique fluoré a un indice de fluidité à chaud (MFR) d'au plus 100 g/10 min à 270 °C, **caractérisé en ce que** le polymère d'acide sulfonique fluoré a une température de transition vitreuse d'au moins 130 °C et une capacité d'échange ionique de 600 à 1300 g/équivalent.

2. Assemblage membrane-électrodes selon la revendication 1, **caractérisé en ce que** le polymère d'acide sulfonique fluoré a une température initiale de décomposition thermique d'au moins 330°C et d'au plus 450 °C lorsque la température est élevée à 10 degrés/min dans l'air par analyse thermogravimétrique.

3. Assemblage membrane-électrodes selon la revendication 1 ou 2, **caractérisé en ce que**, dans le polymère d'acide sulfonique fluoré, la quantité formée d'ions de fluorure est au plus 0,3 % en poids par rapport à la quantité totale de fluore dans le polymère d'acide sulfonique fluoré original quand le polymère sous forme de membrane est

continument contacté avec de l'air saturée avec de l'eau de 80 °C à 200 °C pendant 8 heures.

4. Assemblage membrane-électrodes selon l'une quelconque des revendications 1 à 3, **caractérisé en ce que**, dans le polymère d'acide sulfonique fluoré, l'énergie d'activation pour l'étape cinétiquement déterminante de la réaction dans le processus de décomposition oxydative thermique, obtenue par calcul en utilisant une méthode des fonctionnelles de densité, est au moins 40 kcal/équivalent et au plus 80 kcal/équivalent par rapport à un groupe acide sulfonique.

5. Assemblage membrane-électrodes selon la revendication 1, dans lequel p est 4 ou 6 dans la formule générale (4).

6. Assemblage membrane-électrodes selon l'une quelconque des revendications 1 à 5, dans lequel le polymère d'acide sulfonique fluoré a une conductivité ionique dans de l'eau à 23°C d'au moins 0,06 S/cm.

7. Assemblage membrane-électrodes selon l'une quelconque des revendications 1 à 6, dans lequel le polymère d'acide sulfonique fluoré a une conductivité ionique dans de l'eau à 23 °C d'au moins 0,1 S/cm.

8. Assemblage membrane-électrodes selon l'une quelconque des revendications 1 à 7, **caractérisé en ce que**, dans le polymère d'acide sulfonique fluoré dans la formule générale (4), p est 4 et le rapport des intensités de diffusion ($I^2/I^1$) est au plus 100, où $I^1$ est l'intensité de diffusion à 2θ de 3°, et $I^2$ est l'intensité de diffusion à 2θ de 0,3°, quand le polymère, après être plongé dans l'eau, est mesuré par diffusion des rayons X aux petits angles.

# FIG.1

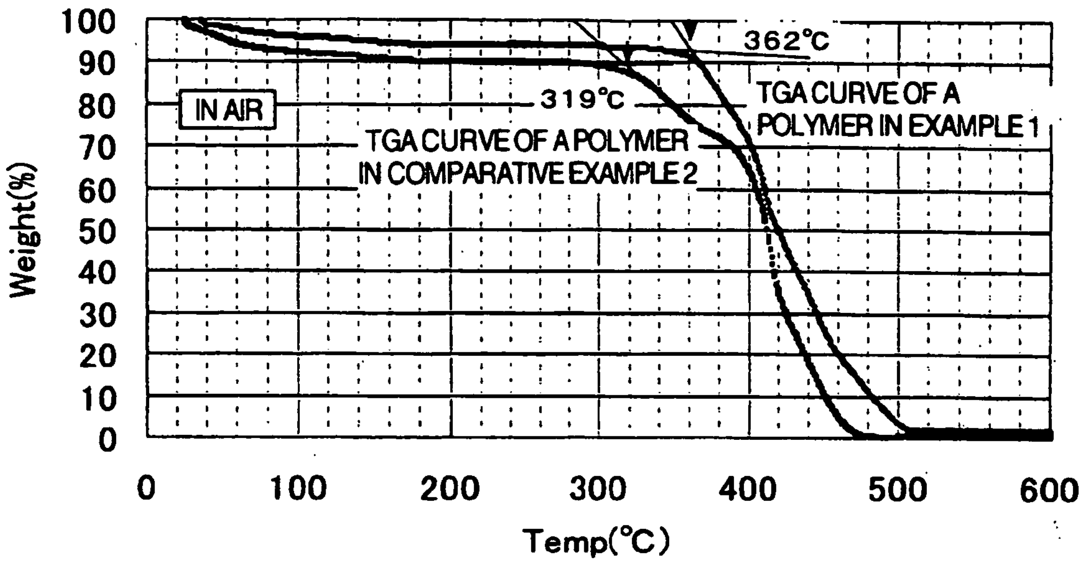
100
90
80
70
60
50
40
30
20
10
0
Weight(%)
0
100
200
300
400
500
600
Temp(°C)
IN AIR
362°C
319°C
TGA CURVE OF A POLYMER IN EXAMPLE 1
TGA CURVE OF A POLYMER IN COMPARATIVE EXAMPLE 2

FIG.2

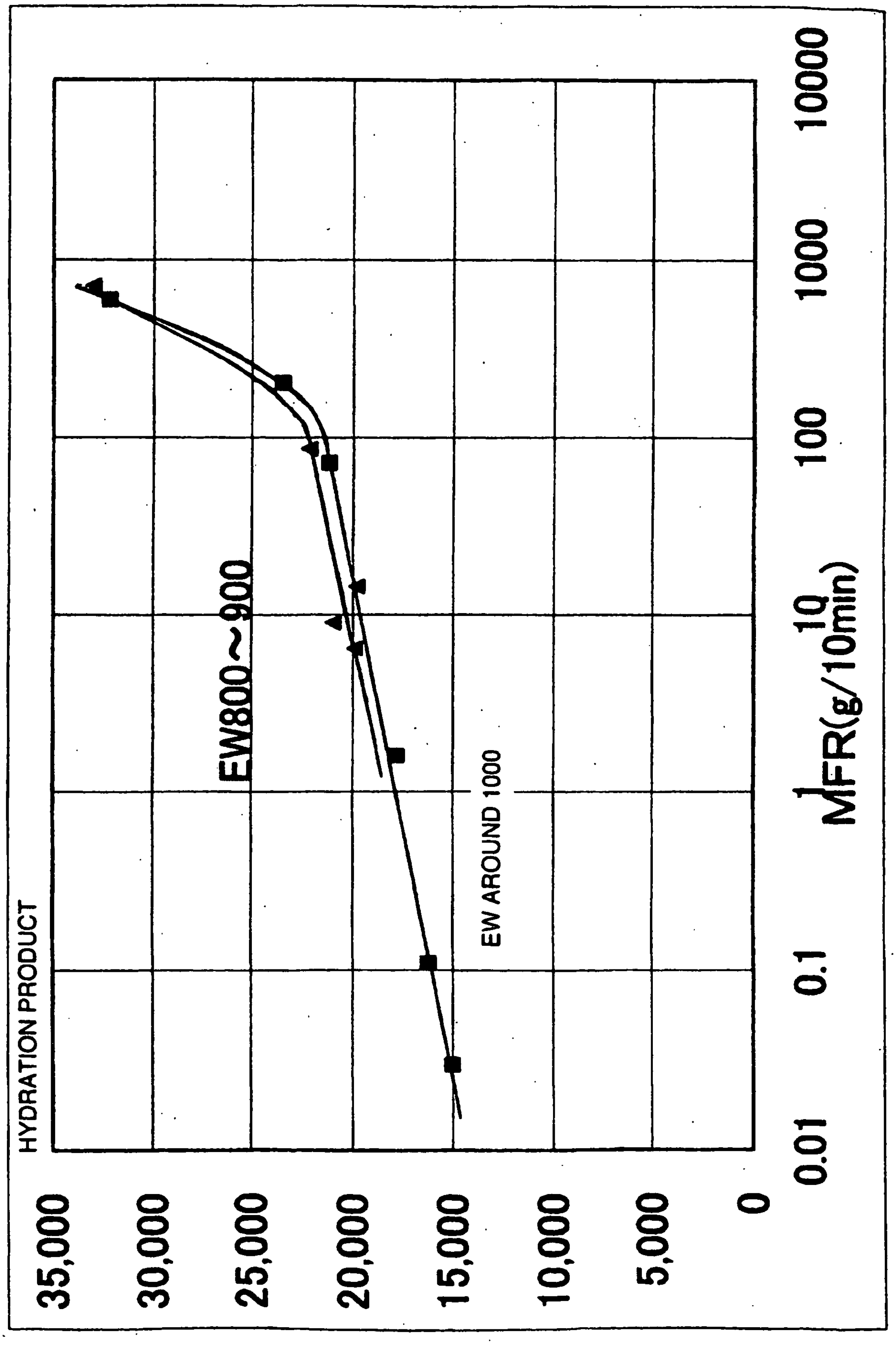

HYDRATION PRODUCT
EW800~900
EW AROUND 1000
35,000
30,000
25,000
20,000
15,000
10,000
5,000
0
0.01
0.1
1
10
100
1000
10000
MFR(g/10min)

FIG.3

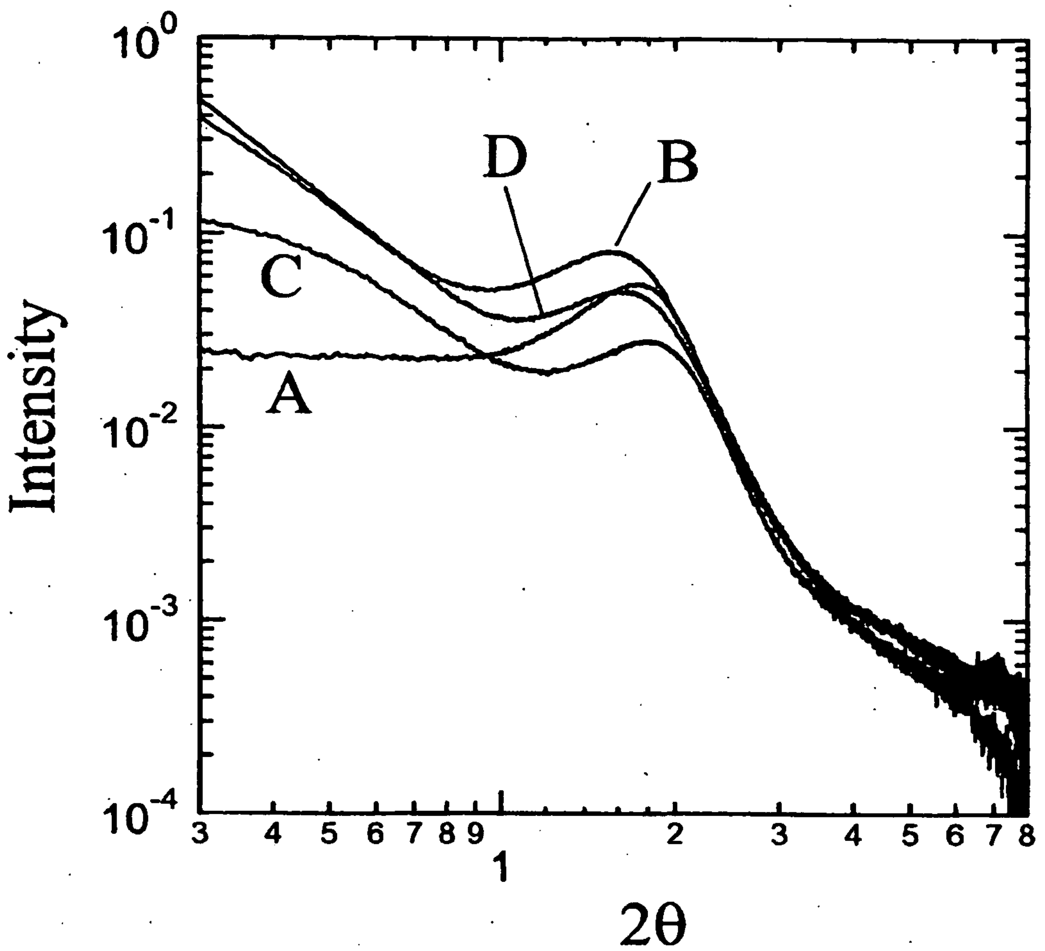

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 57025331 A
- JP 63297406 A
- JP 2000268834 A
- JP 6333574 A
- JP 58093728 A
- JP 2001194798 A
- JP 2002533877 A
- WO 2004062019 A
- WO 2 A
- WO 004062019 A
- EP 1323744 A1
- WO 9403503 A
- US 5281680 A
- AU 523608 B2
- WO 8606879 A
- WO 03050151 A1
- JP 09120827 A
- WO 9407274 A
- JP 57164991 A

### Non-patent literature cited in the description

- **O. Savadogo.** *Journal of New Materials for Electrochemical Systems,* 1998, vol. I, 47-66
- *Journal of Powersources,* 01 February 1999, vol. 29 (3/4), 389-398
- **D. J. Burton.** *Journal of Fluorine Chemistry,* 1993, vol. 60, 93-100